# EUROPÄISCHE PATENTSCHRIFT

(11) **EP 3 090 974 B1**
(45) Veröffentlichungstag und Bekanntmachung des Hinweises auf die Patenterteilung: **19.08.2020**
(21) Anmeldenummer: 16168040.0
(22) Anmeldetag: 03.05.2016
(51) Int. Cl.: B65H 3/52, B65H 1/06, B65H 3/06, B65H 3/56, B65H 9/16, B65G 39/02, B65H 5/06

(54) **ANLEGESTATION ZUM ANLEGEN VON FLACHEM GUT UND ZU DESSEN ZUFÜHRUNG ZU EINER VEREINZELUNGSSTATION**
APPLICATION STATION FOR APPLYING A FLAT PRODUCT AND FOR ITS FEEDING TO A SEPARATING STATION
STATION DE DISPOSITION DE PRODUIT PLAT ET DE GUIDAGE VERS UNE STATION DE SEPARATION

(30) Priorität: 07.05.2015 DE 202015102333 U; 12.04.2016 DE 202016101920 U; 26.04.2016 DE 202016102202 U
(43) Veröffentlichungstag der Anmeldung: 09.11.2016
(73) Patentinhaber: Francotyp-Postalia GmbH, 13089 Berlin (DE)
(72) Erfinder: Muhl, Wolfgang, 16540 Hohen Neuendorf (DE); Ortmann, Axel, 13189 Berlin (DE)

(56) Entgegenhaltungen:
- WO-A1-2014/066838
- US-A- 4 973 037
- US-A1- 2003 150 079

## Beschreibung

Die Erfindung betrifft eine Anlegestation und Verfahren zum Anlegen von flachem Gut und zu dessen Zuführung zu einer Vereinzelungsstation gemäß dem Oberbegriff der Patentansprüche 1 und 21. Eine solche Anlegestation wird in einem Gutverarbeitungssystem, beispielsweise als Station einer Poststraße eines Frankiersystems eingesetzt. Die Poststraße eines Frankiersystems besteht aus einer Vielzahl von einzelnen aneinandergereihten Poststückverarbeitungsstationen. Eine Anlegestation ist poststromaufwärts einer Vereinzelungsstation, d.h. oft am Anfang der Poststraße aufgestellt und dient zum Anlegen von einzelnen oder gestapelten Poststücken an die Vereinzelungsstation, welche den Stapel vereinzelt. Beim Einsatz einer vorgeschalteten Kuvertierstation, welche einzelne kuvertierte Briefe nacheinander auf das Anlegedeck der Anlegestation wirft, liegt der Anfang der Poststraße natürlich bei der Kuvertierstation.

Ein Stapel an Poststücken mit dem gleichen oder unterschiedlichen Format (Mischpost), der an eine Ausrichtwand der Anlegestation angelegt wurde, wird in der Poststraße mittels einer stromabwärts in Transportrichtung unmittelbar nachfolgenden Vereinzelungsstation vereinzelt, weil weitere nachfolgende Poststückverarbeitungsstationen, wie beispielsweise eine dynamische Waage, einzeln zugeführte Poststücke benötigen. Die Anlegestation ist für einen Einsatz in Verbindung mit weiteren stromabwärts nachfolgenden Stationen des Gutverarbeitungssystems vorgesehen, zum Beispiel in Verbindung mit Frankier-, Adressiermaschinen und anderen Postverarbeitungsgeräten.

In Amerika gilt es die Standartformate "Letter" zu verarbeiten, wie Letter 8 1/2 inch x 11 inch (21,59 cm x 27,94 cm), Letter 8 1/2 inch x 14 inch (21,59 cm x 35,56 cm), Letter 14 7/8 inch x 11,69 inch (37,8 cm x 29,69 cm). Insbesondere in Deutschland sind die Formate B4 (25,0 cm x 35,3 cm), B5 (17,6 cm x 25,0 cm), B6 (12,5 cm x 17,6 cm) und C4 (22,9 cm x 32,4 cm), C5 (16,2 cm x 22,9 cm), C6 (11,4 cm x 16,2 cm) üblich. Die Größen der deutschen Papierformate sind bereits im Jahr 1922 vom Deutschen Institut für Normung (DIN) in der DIN-Norm DIN 476 festgelegt worden.

Wenn nachfolgend von einem Stapel gesprochen wird, sind Briefstapel, Postkartenstapel und andere Poststückstapel gemeint, welches sich vereinzeln lässt, aber auch ein anderes gestapeltes flaches Gut soll nicht ausgeschlossen werden.

Bekannte Postverarbeitungsgeräte führen das unterste Poststück eines Poststückstapels einer Ausrichtwand mittels angetriebener Rollen zu. Aus dem US 4.973.037 ist bereits eine Zuführstation für eine Postbehandlungsmaschine bekannt, die zur Behandlung gemischter Post (gefüllte Umschläge mit offener oder geschlossener Umschlagsklappe) mit hoher Geschwindigkeit vorgesehen ist. Das Deck wird Stapelplatte genannt. Die Zuführstation ist mit einer Einrichtung zum Querbewegen einer Seitenwand relativ zur Stapelplatte und mit Transporteinrichtungen in einem Stapelmagazinbereich ausgestattet. Ein Teil der Transporteinrichtungen liegt unterhalb der Stapelplatte. Die Seitenwand dient als Ausrichtungsoberfläche, gegen die die Klappenkanten von Umschlägen zum Anschlag gebracht werden können. Die Transportmittel der Zuführstation sind exzentrisch gestaltete Auflockerungsrollen mit unterschiedlichen Reibungskoeffizienten, die während einer Umdrehung der Auflockerungsrolle abwechselnd über einem Anlegedeck auf- und abtauchen, so dass ein unterstes flaches Gut eines Stapels von flachen Gütern intermittierend kontaktiert wird. Die Reibung an den Rollen, während die flachen Güter intermittierend kontaktiert werden und die benötigte Kraft zur Stapelanhebung ist bei hohen und schweren Stapeln sehr groß. Eine Vielzahl an Rollengruppen von Auflockerungsrollen wird durch einen ersten Motor angetrieben, der die benötigte Kraft aufbringen muss. Die Vielzahl an Rollengruppen von Auflockerungsrollen sind in einem Gestell angeordnet, das mittels eines zweiten Motors und einer Steuerscheibe periodisch in einem kleinen Winkelbereich hin- und her bewegt werden kann. Die Verwendung solcher Auflockerungsrollen mit periodisch auf einen Stapel einwirkender Kraft verursacht aber einen unruhigen Lauf mit erhöhtem Lärmpegel. Durch Einkoppeln von Störschwingungen wird auch eine dynamische Gewichtsmessung in einem Frankiersystem erheblich gestört.

Es sind bereits Mittel zum Transportieren der Poststücke sowohl stromabwärts, als auch in Richtung auf die Ausrichtungswand sowie zum Auflockern der Poststücke (offene oder verschlossene gefüllte Briefumschläge) eines Stapels vorgesehen, damit sie leichter übereinander gleiten können. Außerdem wurde ein Mehrfachschrägstellen der Poststapelplatte im Stapelmagazinbereich vorgeschlagen, um die Schwerkraft für die Ausrichtung der Poststücke zu nutzen. Durch das Mehrfachschrägstellen der Poststapelplatte im Stapelmagazinbereich kann der Briefumschlag beim Übergang in den Zuführbereich mit horizontalen gegebenenfalls einklemmen, insbesondere bei geöffneter Umschlagsklappe. Durch den kleinen Winkelbereich ist eine Ausrichtung der Poststücke nur in einem beschränkten Maße möglich.

Gemäß dem EP 1 533 260 B1 wird eine Rüttelvorrichtung für die Zuführung von Poststücken (Briefe) zu einer Vereinzelungsstation vorgeschlagen. Auf der gesamten Breite der Schleuse der vorgenannten Vereinzelungsstation ist eine Außenleiste mit einer beweglichen Gleitschiene angeordnet, an deren Ende eine Einrüttelklappe angeordnet ist. Nach dem Anlegen eines Stapels mit auf der Seite liegenden Briefen werden die Briefe mittels der Einrüttelklappe in Längsrichtung gegen eine Ausrichtwand geschoben und dabei mittels der Einrüttelklappe aufgelockert und somit ausgerichtet, d.h. in die richtige Lage vor einem nachfolgenden Vereinzeln und Bedrucken gebracht. Die Einrüttelklappe bildet einen seitlich verschiebbaren Anschlag mit einer Gleitführung, der auf die Briefbreite eingestellt werden muss und in dieser Stellung mittels einer Reibbremse arretierbar ist. Die Einrüttelklappe wirkt direkt auf die seitliche Positionierung von Poststücken. Zusätzlich ist auch eine zweite Gleitführung vorgesehen, die mittels einer Feder einen federnden Überhub ermöglicht, um die Briefe nicht einzuklemmen. Jedoch können hiermit nur formatgleiche Briefe ausgerichtet werden.

Ein Zuführgerät gemäß dem EP 1 958 902 B1, ist mit einer verbesserten Transportvorrichtung ausgestattet, die eine Vielzahl an Mitnahmemitteln aufweist, deren Besonderheit darin besteht, dass diese aus einem zylindrischen Rad mit an dessen Umfang zahnradartig angebrachten Zähnen besteht, zwischen denen Achsen für kleine nichtangetriebene unabhängig drehbare Rollen angeordnet sind. Eine Ausrichtung ist möglich, indem ein Poststück oder Stapel an Poststücken per Hand an eine Ausrichtwand geschoben wird.

Das EP 1 510 480 B1 B1 betrifft eine Ausrichteinrichtung eines Postbearbeitungssystems, das Aufrüttel- und Ausrichteinrichtungen mit einer Anzahl einziehbarer Elemente aufweist, die durch Öffnungen einer horizontalen Platte ragen, deren Abstand von einer Ausrichtwand (Bezugswand) dem Format der Poststücke entsprechend einstellbar ist, um die Poststücke zwangszuführen, was zur Verhinderung einer Schrägstellung der Poststücke beitragen soll.

In den oben genannten europäischen Patenten EP 1 533 260 B1, EP 1 958 902 B1 und EP 1 510 480 B1 wurden die Funktionen der Anlegestation und Vereinzelungsstation in einer einzigen Zuführ- und Druckstation kombiniert. Zwar werden auch angetriebene Transportrollen verwendet, jedoch sind diese in ihrer Winkellage zur Transportrichtung nicht verstellbar. Die richtige Ausrichtung der Poststücke wird durch verschiedenartige Schiebeelemente und Einrüttelelemente realisiert.

Diese Gutverarbeitungsgeräte sind im Betrieb sehr laut und auch störanfällig bei der Verarbeitung eines Stapels von Poststücken. Während die Ausrichtung von einzelnen Poststücken unproblematisch ist, können bei der Ausrichtung eines Stapels von gleichformatigen Poststücken bereits Probleme auftreten, falls Formatabweichungen auftreten. Größere Probleme treten bei der Ausrichtung eines Mischpoststapels auf, der unterschiedlich dicke ungleichformatige Poststücke enthält.

Aus der internationalen Patentanmeldung WO2014066838 A1 ist bereits eine Drehförderfläche mit einer variablen Ausgangsrichtung bekannt, während die Eingangsrichtung konstant beibehalten wird. Die Drehförderfläche kann zum Transport eines Förderguts in mehr als eine Richtung verwendet werden. Die Antriebsenergie kann von mindestens einer linearen Antriebsquelle, welche eine Antriebsleistung eine erste Richtung abgibt, zu der Drehförderfläche übertragen werden, die eine Vielzahl von Antriebsmitteln aufweist, wobei die Antriebsenergie zu den ausgangsseitigen Antriebsmitteln übertragbar ist. Jedes Antriebsmittel hat einen Eingangsantrieb, der um eine Eingangsachse drehbar ist und so konfiguriert ist, dass er eine lineare Leistung von der mindestens einen Quelle empfängt, wobei die Eingangsachse im Allgemeinen senkrecht zur ersten Richtung steht. Jedes Antriebsmittel weist einen Ausgangsantrieb auf, der um eine Ausgangsachse drehbar ist und betriebsmäßig mit dem Eingangsantrieb verbunden ist, wobei der Ausgangsantrieb eine Orientierung aufweist, die variiert werden kann, und einen Antriebsstrang, wobei der Antriebsstrang ein erstes, zweites und drittes Element aufweist. Das erste Element ist ein Kegelrad, das um eine erste Achse drehbar angetrieben ist, wobei die erste Achse im Wesentlichen senkrecht zur Förderfläche steht. Das zweite Element ist um eine zweite Achse drehbar, wobei die zweite Achse senkrecht zur ersten Achse steht, wobei der Eingangsantrieb das erste Element durch das zweite Element betreibbar antreibt. Das dritte Element, ist um eine dritte Achse drehbar, wobei die dritte Achse senkrecht zur ersten Achse ist, wobei der Eingangsantrieb das dritte Element durch das erste Element und das zweite Element betreibbar antreibt. Der Antrieb durch ein Förderband als lineare Antriebsquelle hat den Nachteil, dass partiell ein Teil der Antriebsmittel der Drehförderfläche nicht voll angetrieben werden kann, weil das eingangsseitige Antriebselement einen Schlupf gegenüber dem Förderband aufweist. Dadurch ist die Ausrichtfunktion der Drehförderfläche für das Fördergut fehlerhaft.

Im Bereich von Frankiermaschinen ist es schon bekannt, ein aus einem Stapel vereinzeltes Poststück in Transportrichtung poststromabwärts transportieren und während des Transportes mit einem Frankierabdruck bedrucken. In der Frankiermaschine Centormail® der Anmelderin wird bereits Mischpost auf der Kante stehend mittels einem Transportband transportiert, wobei an der Kante automatisch eine Ausrichtung der Poststücke durch die Schwerkraft erfolgt.

Im Bereich von Frankiermaschinen sind auch Lösungen bekannt, die ein auf einer Seite liegendes Poststück in Transportrichtung poststromabwärts transportieren, wie beispielsweise die Frankiermaschine PostBase® der Anmelderin. Dieser Frankiermaschine kann eine automatische Zuführstation posteingangsseitig vorangestellt werden. Das so gebildete Frankiersystem ist aber nicht für Mischpost, sondern nur für gleichformatige Postsendungen geeignet. In dem deutschen Gebrauchsmuster DE 20 2011 107 379 U1, welches äquivalent zu dem US 8 702 090 B2 ist, wurde bereits eine modulare Anlegevorrichtung einer Zuführstation vorgeschlagen. Die Zuführstation folgt poststromabwärts der Anlegestation, die als rein manuell bedienbares Modul ohne eigene Antriebstechnik ausgebildet ist, dessen Auflegedeck bei Bedarf rampenartig aufgestellt werden kann. Durch die aufgestellte Rampe wird die Schwerkraft bei der Zuführung von Poststücken benutzt. Jedoch erfolgt keine Ausrichtung der Poststücke durch die Schwerkraft. Vielmehr ist ein Schieber vorgesehen, mit welchen ein Stapel manuell an eine Führungsplatte der Anlegestation gedrückt wird, welche als Ausrichtwand dient. Damit können nur unterschiedlich dicke Poststücke gleichen Formats bis zu einen Durchsatz von 65 Poststücken des DIN-Formats C6 bzw. C6-lang pro Minute sicher verarbeitet werden. Mit dem Schieber kann also nicht sichergestellt werden, dass alle Poststücke eines Mischpoststapels mit ihrer Seitenkante an der Ausrichtwand anliegen. Problematisch wird es für eine Kantenausrichtung dann, wenn die auf ihrer Seite liegend transportierten Poststücke ohne Mitwirkung der Schwerkraft an einer Ausricht-, Anlage- bzw. Führungswand ausgerichtet werden sollen. Sicherheitshalber wird deshalb ein Stapel von Poststücken per Hand an einer Kante des Stapels ausgerichtet und dann angelegt. Bei den Poststücken treten in der Praxis auch Formatabweichungen auf, was zu unerwünschten Störungen des Betriebes führen kann.

Unter Mischpost sollen nachfolgend unterschiedlich dicke flache überwiegend gleichformatige Poststücke eines Stapels verstanden werden, die trotz einer Toleranz bis zu +/- 20mm der Abmessungen von den Postverarbeitungsstationen verarbeitet werden müssen.

Es ist Aufgabe, eine Anlegestation zum Anlegen sowohl von einem einzelnen flachen Gut als auch von einem Stapel von flachen Gütern und zu dessen Zuführung zu einer Vereinzelungsstation zu entwickeln, die einen höheren Durchsatz an flachen Gütern ermöglicht, wobei die flachen Güter auf der Seite liegend transportiert werden und die oben genannten Nachteile des Standes der Technik nicht auftreten. Die Anlegestation soll als separates Modul zur Kantenausrichtung von flachen Gütern mit eigener Antriebstechnik ausgebildet werden, das stromaufwärts einer Vereinzelungsstation angeordnet ist. Die richtige Ausrichtung eines Stapels von flachen Gütern (Poststücken) soll ohne verschiedenartige Schiebeelemente und Einrüttelelemente realisiert werden, welche bei gleichformatigen flachen Gütern üblich sind. Bekanntlich steigt mit einem höheren Durchsatz auch die Fehlerrate bei der Vereinzelung eines flachen Gutes aus einem Stapel. Beim Abziehen des jeweils untersten flachen Guts aus einem ausgerichteten Stapel können die übrigen flachen Güter, die im Stapel verbleiben, ungewollt in eine unausgerichtete Lage gebracht werden, wobei die Anlegekante von einigen der flachen Güter einen Abstand von 3 bis 5 mm von der Ausrichtwand erreicht. Der Stapel ist dann nicht mehr korrekt ausgerichtet. Der Stapel soll flache Güter unterschiedlicher Dicke und mit Formatabweichungen in der Länge und Breite enthalten dürfen, aber dennoch soll die Anlegekante des jeweils untersten der flachen Güter des Stapels korrekt an die Ausrichtwand herangeführt und ausgerichtet werden. Insbesondere soll die Anlegestation zusammen mit der Vereinzelungsstation einen höheren Durchsatz bis zu 100 Poststücken des DIN-Formats C6 bzw. C6-lang pro Minute ermöglichen.

Die Fehlerrate kann bei einer solchen Anlegestation durch solche flachen Güter weiter ansteigen, deren Oberflächen bei einem Kontakt mit den Oberflächen von anderen Gütern oder mit den Oberflächen der Transportelemente einen sehr unterschiedlichen Reibwert aufweisen, insbesondere auch bei solchen Gütern, die keine Poststücke sind. Durch die moduleigene Antriebstechnik können via Traktion auswählbar andere Kräfte als durch die Schwerkraft auf die flachen Güter ausgeübt werden, wodurch Quetschungen oder ein Zerknittern eines flachen Gutes, wie beispielsweise eines Briefkuverts, an der Ausrichtwand wahrscheinlicher werden, wenn die flachen Güter durch die Antriebstechnik nicht nur in Transportrichtung der stromabwärts unmittelbar nachfolgenden Zuführstation zugeführt, sondern auch an der Ausrichtwand ausgerichtet werden sollen. Deshalb besteht eine weitere Aufgabe darin, die Fehlerrate zu verringern und die Vereinzelungssicherheit durch eine korrekte Ausrichtung des Stapels zu erhöhen. Die jeweils direkt auf dem Anlagedeck liegenden, also die untersten nicht ausgerichteten flachen Güter eines Stapels sollen an der Ausrichtwand der Anlegestation automatisch ausgerichtet werden, ohne dass es zu einer Quetschung oder zu einem Zerknittern eines flachen Gutes an der Ausrichtwand kommt.

Die flachen Güter innerhalb eines Stapels sollen unterschiedliche Abmessungen (Dicke und Formatabweichungen) aufweisen dürfen. Die Anlegestation soll für Poststücke aber auch für ein anderes stapelbares Gut geeignet sein, welches Formatabweichungen bis zu 20% in der Länge und Breite aufweist.

Die Aufgabe wird mit den Merkmalen der Anlegestation nach dem Patentanspruch 1 und einem Verfahren nach dem Patentanspruch 19 gelöst.

Die Anlegestation weist eine Vielzahl von Transportmodulen auf, die jeweils mit einem kopfseitig montierten Transportelement durch eine zugehörige Öffnung in einem Anlegedeck der Anlegestation in eine z-Richtung eines kartesischen Koordinatensystems hindurchragen, wobei die z-Richtung der Schwerkraftrichtung gegenüberliegt. Ein jedes Transportelement weist einen balligen runden oder tonnenförmigen Körper mit einem Äquator auf, wobei beidseitig des Äquators ein unterschiedlicher Reibwert des vorgenannten Körpers des Transportelements vorgesehen ist, dass die Transportmodule in einer solchen Ausrichtung positioniert sind, so dass die Körperhälfte des Transportelements mit dem höhen Reibwert der Ausrichtwand der Anlegestation am nächsten liegt. Somit lassen sich die flachen Güter von der Körperhälfte des Transportelements mit dem niedrigeren Reibwert über den Äquator in y-Richtung zu der Ausrichtwand verschieben, wenn dazu die durch die Transportelemente der variabel positionierbaren Transportmodule in y-Richtung des kartesischen Koordinatensystems ausgeübte Traktionskraftkomponente ausreichend ist. Es ist vorgesehen, dass die Transportmodule entgegen einer Federkraft F1 unter das Anlegedeck in Schwerkraftrichtung absenkbar angeordnet sind.

Die Transportelemente aller Transportmodule werden durch einen einzigen Antriebsmotor via Zahnriemenrolle, Zahnriemen und Zahnriemenscheiben angetrieben. In einem minimalen Abstand zur Ausrichtwand der Anlegestation ist eine Reihe a von in einer Ausrichtrichtung festpositionierbaren Transportmodulen und in einem weiteren bis zu einem maximalen Abstand zur Ausrichtwand sind weitere Reihen b, c, d von in der Ausrichtung variabel positionierbaren Transportmodulen angeordnet, wobei sich jede Reihe in eine Transportrichtung x des kartesischen Koordinatensystems erstreckt, die Reihe c der Reihe d, und die Reihe b der Reihe c sowie die Reihe a der Reihe b in y-Richtung des kartesischen Koordinatensystems benachbart ist. Die Reihen b, c, d von in der Ausrichtung variabel positionierbaren Transportmodulen sind einerseits zur Ausrichtung von flachen Gütern an der Ausrichtwand vorgesehen, welche von einer vorgeschalteten Kuvertierstation einzeln und nacheinander auf das Anlegedeck der Anlegestation ausgeworfen werden. Andererseits sind die Reihen b, c, d auch zum Ausrichten eines Stapels großformatiger flacher Güter vorgesehen, der an die Anlegestation angelegt wird.

Jedes der Transportelemente der Transportmodule übt eine Traktionskraftkomponente in Transportrichtung x und in y-Richtung aus, wobei die Traktionskraftkomponente in Transportrichtung x überwiegt. Jedes der Transportelemente der vorgenannten Reihe a von in der Ausrichtung festpositionierbaren Transportmodulen übt eine Traktionskraftkomponente in y-Richtung aus, die Null oder zu mindestens sehr klein ist, im Unterschied zu den Transportelementen der vorgenannten Reihen b, c und d von in der Ausrichtung variabel positionierbaren Transportmodulen.

Die Transportmodule sind in y-Richtung unter dem Anlegedeck in einem Vierblock und Sechserblock angeordnet, wobei der Vierblock nahe der Frontseite der Anlegestation und der Sechserblock näher zu der Ausrichtwand liegt.

Einerseits wurde empirisch gefunden, dass ein gemeinsamer Antrieb für eine Anzahl an angetriebenen Transportelementen ausreichend ist, wobei die Transportmodule unter dem Anlegedeck angeordnet sind und mit einem Teil des Transportelements durch jeweils eine zugehörige Öffnungen im Anlegedeck in z-Richtung hindurch ragen, wobei das vorgenannte Teil eine Traktionskraft auf ein flaches Gut ausübt. Eine Federkraft beaufschlagte Andruckgabel, die den Stapel an die Transportelemente andrückt, ist so angeordnet, dass der Stapel zugleich an die Ausrichtwand angedrückt wird. Ein Vorteil der Andruckgabel besteht darin, dass diese ein Abrutschen der obersten Poststücke vom Stapel verhindert. Bei der Haftreibung zwischen dem untersten flachen Gut des Stapel und dem jeweils nachfolgenden zu vereinzelnden flachen Gut ist das Gewicht des Stapels zu beachten, wenn das unterste flachen Gut im Stapel zuerst vereinzelt werden soll und die flachen Güter nicht auf der Kante stehend, sondern auf der Seite liegend von den Transportelementen transportiert werden. In vorteilhafter Weise können zusätzliche am Stapel rüttelnde Mittel vermieden werden, die bisher gemäß dem Stand der Technik zur Auflockerung der flachen Gegenstände des Stapels erforderlich waren. Das wird durch die Ausrichtung der Transportelemente und deren Anordnung in einem minimalen Abstand zur Ausrichtwand der Anlegestation, die spezielle Gestaltung und des durch Öffnungen im Anlegedeck hindurchragenden Körperteils der Transportelemente erreicht, der in seiner ersten Hälfte eine höhere Haftreibung bewirkt, als zwischen den flachen Gütern (Poststücken) auftritt und der in seiner zweiten Hälfte einen geringeren Reibungskoeffizienten (Reibwert) aufweist, als in der ersten Hälfte. Der geringere Reibungskoeffizient des Körperteils ermöglicht vorteilhaft eine Gleitreibung für das flache Gut, das in y-Richtung, also quer zur Transportrichtung x verschoben wird, wenn das Gut oder der Stapel angelegt wird. So ist es insbesondere vorteilhaft, für eine dynamische Dimensions- und/oder Gewichtsmessung in einer in Transportrichtung nachfolgend angeordneten Station, wenn durch die in einem minimalen Abstand zur Ausrichtwand der Anlegestation fest positionierten Transport-module eine Gleitreibung in y-Richtung und eine Haftreibung in Transportrichtung x auf flache Güter wirksam wird. Messfehler in einer dynamischen Waage treten kaum auf, wenn in keiner Station eine Rüttelbewegung stattfindet. Das jeweils unterste Poststück eines Stapels mit mehreren gestapelten Poststücken kann zum Anschlag an der Ausrichtwand verschoben werden, ohne dass plötzlich Stöße auftreten, und wird erst dann vom Stapel abgezogen.

Andererseits wurde empirisch gefunden, dass ein Stapel bei einem Abziehen des jeweils untersten flachen Guts in einer Abziehposition stabil gehalten werden muss, die ein Verkanten von nachfolgenden weiteren flachen Gütern (Poststücken) während des Abziehens des jeweils untersten flachen Gutes (Poststücks) eines Stapels verhindert. Auch das wird ohne Einsatz von Rüttelelementen und durch die variable Ausrichtung, spezielle Anordnung der Transportmodule und der Gestaltung der Transportelemente erreicht.

Es sind Einstellmittel zur Lageausrichtung vorgesehen, um die Transportmodule durch eine mechanische Verstellung in eine Winkellage zur Transportrichtung zu drehen und um damit die Anlegestation an die Kuvertierstation anzupassen. Die Einstellmittel zur Lageausrichtung gestatten eine händische Einstellung der in y-Richtung ausgeübten Kraftkomponente.

Die Konstruktion des Einstellmittels zur Lageausrichtung gestattet beispielsweise eine Verstellung des Ausrichtungswinkels von 0° bis 45° zur Transportrichtung x in festen Stufen, wobei Winkelsegmente im Bereich von 3 bis 9° eingestellt werden. Damit lässt sich die Traktion in Transportrichtung x und die Traktion in y-Richtung zu der Ausrichtwand variieren. Vorteilhaft ist eine Verstellung des Ausrichtungswinkels der Transportmodule mit je einem Transportelement ist auch während der Verarbeitung der flachen Güter möglich.

Alle variabel positionierbaren Transportmodule sind über eine Verzahnung mit einer Stellmechanik selbsthemmend in ihren verschiedenen Winkelpositionen miteinander verbunden, was eine ungewollte eigenständige Verstellung des Ausrichtungswinkels während des Transports eines flachen Gutes verhindert. Die Stellmechanik ist Bestandteil einer Lageausrichtungsmechanik, die ein Getriebe aufweist, das die Stellkraft erhöht bzw. verringert.

Die Transportmodule lassen sich bei ihrer Montage in der Anlegestation individuell unterschiedlich ausrichten und anschließend in der Ausrichtung gemeinsam um einen vorbestimmten Winkel verstellen. Somit lässt es sich auch ermöglichen, dass die weiter von der Ausrichtwand entfernten in der Ausrichtrichtung variabel positionierbaren Transportmodule einen steileren Ausrichtungswinkel zur Ausrichtwand aufweisen, als die nicht so weit von der Ausrichtwand entfernten in der Ausrichtrichtung variabel positionierbaren Transportmodule. Damit können die Kanten von kleinformatigen flachen Gütern schneller an die Ausrichtwand gelangen, wenn sie von der Ausrichtwand entfernt auf das Anlegedeck auftreffen bzw. aufgelegt werden. Weiterhin sind neben den vorgenannten Mitteln zum Einstellen des Ausrichtungszustandes der Transportelemente der Anlegestation außerdem Mittel zur Steuerung der Transportgeschwindigkeit der flachen Güter vorgesehen, die in Transportrichtung x durch die Transportelemente transportiert werden.

Die Anordnung von Sensoren kann auf dem Anlegedeck und/oder an der Ausrichtwand der Anlegestation erfolgen. Mindestens ein Auslösesensor ist poststromausgangsseitig in der Anlegestation vorgesehen. Der Auslösesensor kann beispielsweise als Durchgangslichtschranke ausgebildet sein, die aus einer lichtemittierenden Diode (LED) als Sendeeinheit und aus einem Fototransistor als Empfangseinheit besteht. Die Sendeeinheit ist unterhalb einer Öffnung in dem Anlegedeck angeordnet. Die Empfangseinheit ist hinter einer langlochförmigen Öffnung der Ausrichtwand der Anlegestation und 20-30mm oberhalb der Öffnung in dem Anlegedeck angeordnet, wobei ein quer zur y/z-Ebene des kartesischen Koordinatensystems abgestrahlter Lichtstrahl empfangen wird, wenn kein flaches Gut ordnungsgemäß anliegt.

Die Transportmodule sind unter dem Anlegedeck der Anlegestation absenkbar angeordnet. Das gestattet vorteilhaft einerseits eine Reibwertbegrenzung bei der Verarbeitung schwerer Güter oder Stapel und andererseits eine Anpassung an das Dickenprovil in x- und y-Richtung von jedem Poststück. Dabei wird vorteilhaft auch eine gleichmäßigere Belastung des gemeinsamen Motors der Anlegestation erzielt.

In einer ersten Ausführungsvariante, weist nur eine Vereinzelungsstation eine Steuereinheit auf. Ein Computerprogramm ermöglicht eine Datenverarbeitung durch die Steuereinheit der Vereinzelungsstation, nachdem es in Speichermittel der gemeinsamen Steuereinheit geladen worden ist, um ein Verfahren zum Steuern der Transportelemente der Anlegestation und ein Verfahren zum Vereinzeln von Mischpost durch die Vereinzelungsstation in einer vorbestimmten zeitlichen Reihenfolge durchzuführen. Der Auslösesensor liefert ein Signal, sobald sich ein flaches Gut oder ein Stapel mit flachen Gütern im Sensorbereich befinden, wobei vorgesehen ist, dass die Steuereinheit diese Signale auswertet, um den gemeinsamen Motor der Anlegestation und einen weiteren Motor in der Vereinzelungsstation anzusteuern, wenn das flache Gut oder ein Stapel von flachen Gütern korrekt angelegt wurde.

Die Anlegestation und die Vereinzelungsstation sind jeweils in einem separaten Gehäuse untergebracht und weisen jeweils eine Schnittstelle auf. Die Anlegestation weist außerdem Sensoren zur Überwachung der Bewegung des Stapels bzw. der flachen Güter und einen Encoder auf, dessen Signale zur Ermittlung des zurückgelegten Transportweges von der Steuereinheit ausgewertet werden. Die Sensor- und Encodersignale der Anlegestation werden über die Schnittstellen durch die Steuereinheit der Vereinzelungsstation abgefragt. Über die Schnittstelle können sowohl Encoder- und Sensorsignale von der Anlegestation an die Steuereinheit der Vereinzelungsstation geliefert, als auch Steuerbefehle von der Steuereinheit der Zuführstation an den Antriebsmotor übermittelt werden, zur Steuerung der Transportgeschwindigkeit. Alle Transportmodule der Anlegestation werden gemeinsam angetrieben. Der Antriebsmotor ist ein elektrischer Motor, der eine Antriebswelle aufweist, die via weitere Mittel, wie Zahnriemenrolle, Zahnriemen mit einer auf einer weiteren feststehenden Achse montierten drehbaren Zahnriemenscheibe mit fest verbundener Encoderscheibe, antriebmäßig gekoppelt ist. Der elektrische Motor ist mit der Schnittstelle der Anlegestation elektrisch verbunden. Die Anlegestation und die Zuführstation weisen jeweils separate Netzteile auf oder verwenden ein gemeinsames Netzteil, das in einer der beiden vorgenannten Stationen angeordnet ist.

In einer zweiten Ausführungsvariante ist jeweils eine Steuereinheit in der Anlegestation und der Vereinzelungsstation vorgesehen. Die Steuereinheit der Vereinzelungsstation ist mit der Steuereinheit der Anlegestation kommunikativ verbunden. Ein erstes Computerprogramm ermöglicht eine Datenverarbeitung durch die Steuereinheit der Anlegestation, nachdem es in Speichermittel der Steuereinheit geladen worden ist, um ein Verfahren zum Steuern der Transportelemente der Anlegestation in einer vorbestimmten zeitlichen Reihenfolge durchzuführen. Ein zweites Computerprogramm ermöglicht eine Datenverarbeitung durch die Steuereinheit der Vereinzelungsstation, nachdem es in Speichermittel von deren Steuereinheit geladen worden ist, um ein Verfahren zum Vereinzeln von Mischpost durch die Vereinzelungsstation in einer vorbestimmten zeitlichen Reihenfolge durchzuführen. Die Steuereinheit der Anlegestation und die Steuereinheit der Vereinzelungsstation sind jeweils in einem separaten Gehäuse untergebracht und stehen miteinander in kommunikativer Verbindung. Die Anlegestation und die Vereinzelungsstation weisen jeweils wieder Sensoren, Encoder und separate Netzteile auf.

In Verbindung mit der dritten Ausführungsvariante ist ein Computerprogramm vorgesehen, welches eine Datenverarbeitung durch eine gemeinsame Steuereinheit eines Gutverarbeitungsgeräts ermöglicht, nachdem es in Speichermittel der gemeinsamen Steuereinheit geladen worden ist, um mindestens ein Verfahren zum Steuern der Transportelemente der Anlegestation und ein Verfahren zum Vereinzeln von flachen Gütern mit unterschiedlichen Format durch die Vereinzelungsstation in einer vorbestimmten zeitlichen Reihenfolge durchzuführen. Die einzelnen Stationen sind in einem gemeinsamen Gehäuse untergebracht und stehen miteinander in kommunikativer Verbindung. Das Gutverarbeitungsgerät hat ein gemeinsames Netzteil.

Es sind ein Sensor zur Erfassung des Anlegens eines Stapels oder einzelnen flachen Guts, ein Encoder und ggf. ein weiterer Sensor zur Erfassung einer fehlerhaften Lageausrichtung des Stapels oder einzelnen flachen Guts vorgesehen. Die Sensor- und die Encodersignale des Encoders der Anlegestation können durch die Steuereinheit abgefragt werden. In der bevorzugten Ausführungsform wird der Auslösesensor zur Erfassung einer fehlerhaften Lageausrichtung des Stapels oder einzelnen flachen Guts mitverwendet.

In einer weiteren nicht gezeigten Ausführungsform ist vorgesehen, einen weiteren elektrisch ansteuerbaren Verstellmotor, vorzugsweise einen elektrischen Motor, für eine Winkelverstellung mit sehr geringer Verzögerung anzusteuern und die Winkelverstellung per Software je nach Erfordernis zu realisieren, wobei weitere Sensoren angeordnet sind, die Sensorsignale an die Steuereinheit liefern, um die Erfordernisse festzustellen. Einerseits sind zur Feststellung der aktuellen Winkelverstellung Sensoren unterhalb des Anlegedecks im Bereich eines Abstandes G zwischen den Reihen c und d der Transportmodule sowie zwischen dem Vierblock und dem Sechserblock der Transportmodule angeordnet. Ein Verbindungsteil für Zahnstangen ist ausgebildet, in Abhängigkeit von der Ausrichtung bzw. Verstellung der Zahnstangen einen Lichtstrahl mindestens eines Sensors oder einer Sensorzeile zu unterbrechen. Der Sensors bzw. die Sensorzeile ist beispielsweise auf der Oberfläche derselben Lagerplatte montiert, auf welcher auch die Transportmodule angeordnet sind. Andererseits sind zur Feststellung der aktuellen Schieflage der Anlegekante des jeweils im Stapel untersten flachen Gutes weitere Sensoren unterhalb des Anlegedecks in einem Bereich nahe der Ausrichtwand, zwischen der Reihe a von Transportmodulen und der Ausrichtwand angeordnet. Dabei können taktile oder optische Sensoren zum Einsatz kommen, die durch entsprechende Öffnungen des Anlegedecks hindurch ragen.

Es ist außerdem ein computerlesbares Speichermedium vorgesehen, auf dem Programmcode gespeichert ist, der nachdem einem Laden in Speichermittel der Steuereinheit der separaten oder der gemeinsamen Steuereinheit ermöglicht, mindestens ein Verfahren zum Steuern der Transportelemente der Anlegevorrichtung bzw. der Anlegestation und ein Verfahren zum Vereinzeln von flachen Gütern mit unterschiedlichen Format durch die Vereinzelungsstation in einer vorbestimmten zeitlichen Reihenfolge durchzuführen. Ein technisches Verfahren soll mindestens die Verfahrensschritte enthalten:
a) Ausstatten eines Auflegedecks einer Anlegestation mit Transportmodulen zur Kantenausrichtung und zum Transport von einzelnen oder in einem Stapel gestapelten flachen Gütern in Transportrichtung x zur Zuführung der flachen Güter zu einer stromabwärts liegenden Vereinzelungsstation, wobei die flachen Güter ein gleiches oder unterschiedliches Format aufweisen,
b) Ansteuerung eines gemeinsamen Antriebsmotors der Transportelemente, um ein automatisches Anlegen des Stapels an die Ausrichtwand in einer y-Richtung sowie einen Transport des Stapels in Transportrichtung x zur Zuführung der flachen Güter zu der Vereinzelungsstation zu ermöglichen, wobei eine erste Teilmenge der Transportelemente in einen minimalen Abstand zu der Ausrichtwand und eine zweite Teilmenge der Transportelemente in einen weiteren bis maximalen Abstand zu der Ausrichtwand wirksam ist, wobei der Abstand dem maximalen Format einsprechend so groß gewählt ist, dass die Transportelemente vom Rand bis zur Mitte eines flachen Guts mit maximalen Format wirksam sind,
c) Durchführung eines gemeinsamen Einstellens einer Ausrichtung zwischen der x- und y-Richtung der zweiten Teilmenge der angetriebenen Transportelemente, um ein Ausrichten und einen Transport des Stapels oder eines flachen Guts in Transportrichtung zu ermöglichen.

Der Antriebsmotor weist eine Motorwelle auf, die mit einer Antriebszahnriemenrolle formschlüssig verbunden ist, welche via eines Zahnriemens eine weitere Zahnriemenscheibe antreibt. Diese Antriebsmittel bilden einen gemeinsamen Antrieb für eine Anzahl an angetriebenen Transportmodulen. Die weitere Zahnriemenscheibe ist zusammen mit einem kleinen Zahnrad als erste Getriebestufe ausgebildet und drehbar auf einer weiteren feststehenden Achse montiert. Eine zweite Getriebestufe ist jeweils für den Vierblock und den Sechserblock von Transportmodulen vorgesehen. Jede der zweiten Getriebestufen weist ein großes Zahnrad und eine Zahnriemenscheibe auf, die miteinander formschlüssig verbunden sind. Die erste und die zweiten Getriebestufen bilden ein Getriebe für eine Anzahl an Zahnriemenscheiben. Das Getriebe ist als ein zum Antriebsmittel zugehöriges weiteres Mittel des gemeinsamen Antriebs vorgesehen.

Jede der Zahnriemenscheiben einer Anzahl an Zahnriemenscheiben, wobei die Zahnriemenscheiben den Transportmodulen zugeordnet sind, ist als radiales Gleitlager mit Lagerbuchse für einen eingesteckten Gleitkörper und mit einer zentrischen Öffnung ausgebildet, deren Profil dem vorbestimmten Profil der Antriebswelle des Transportmoduls entspricht.

Es ist vorgesehen, dass der Motor des gemeinsamen Antriebs in einem Bereich zwischen der Ausrichtwand und der Rückseite der Anlegestation angeordnet ist.

Es ist weiter vorgesehen, dass das Positionseinstellungsmittel mit einem Betätigungsmittel über eine Bewegungsmechanik zur Lageausrichtung von einigen der Transportelemente mechanisch gekoppelt ist, wobei die Bewegungsmechanik in einem Bereich zwischen der Ausrichtwand und der Vorderseite der Anlegestation und unterhalb des Auflegedecks angeordnet ist.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1,: perspektivische Darstellung einer Anlegestation mit einer Anzahl an Transportelementen, von vorn links oben,
- Fig. 2,: perspektivische Darstellung eines Ausschnitts einer Anlegestation mit einem montierten Transportmodul, von rechts oben,
- Fig. 3,: perspektivische Darstellung einer Anzahl von auf einer Oberseite einer Lagerplatte montierten Transportmodulen, von vorn links oben,
- Fig. 3a,: Detail B1 der Fig. 3,
- Fig. 4,: perspektivische Darstellung einer Unterseite des Anlegedecks mit montierten Transportmodulen,
- Fig. 4a,: perspektivische Darstellung eines Ausschnitts der Unterseite des Anlegedecks mit montierten Transportmodulen, nach Fig.4,
- Fig. 5,: perspektivische Darstellung einer Anordnung zweier Gegenlagerplatten im Abstand zu der Lagerplatte und zu der Unterseite des Anlegedecks,
- Fig. 6,: perspektivische Darstellung eines Ausschnitts der Unterseite des Anlegedecks,
- Fig. 6a,: Detail A1 der Fig. 6,
- Fig. 7,: perspektivische Darstellung eines Ausschnitts der Unterseite der Lagerplatte mit einem Getriebe der Antriebmechanik,
- Fig. 8,: perspektivische Darstellung eines Ausschnitts der Unterseite des Anlegedecks mit einem Getriebe einer Lageausrichtungsmechanik.

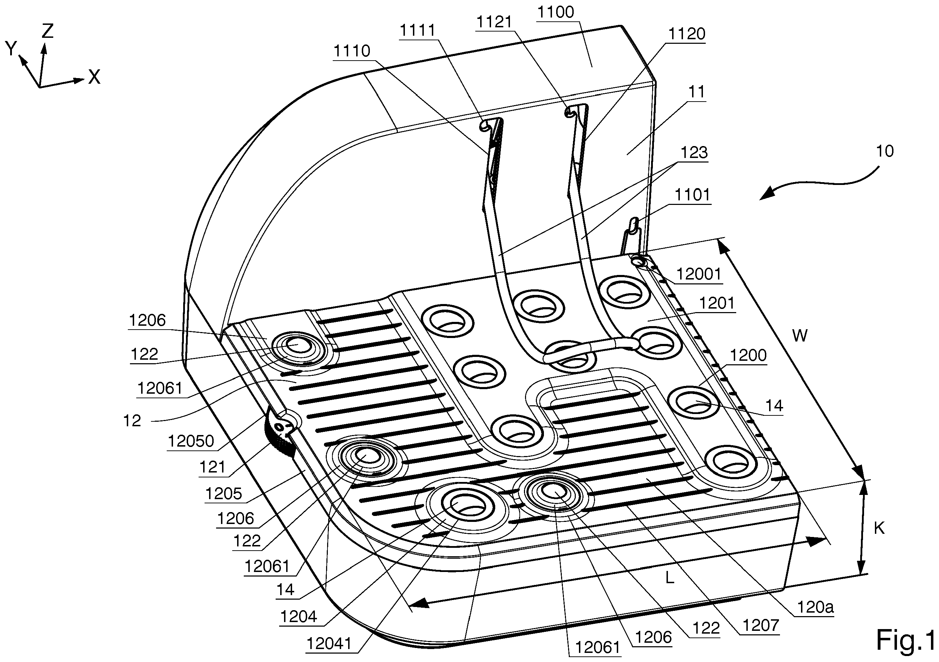

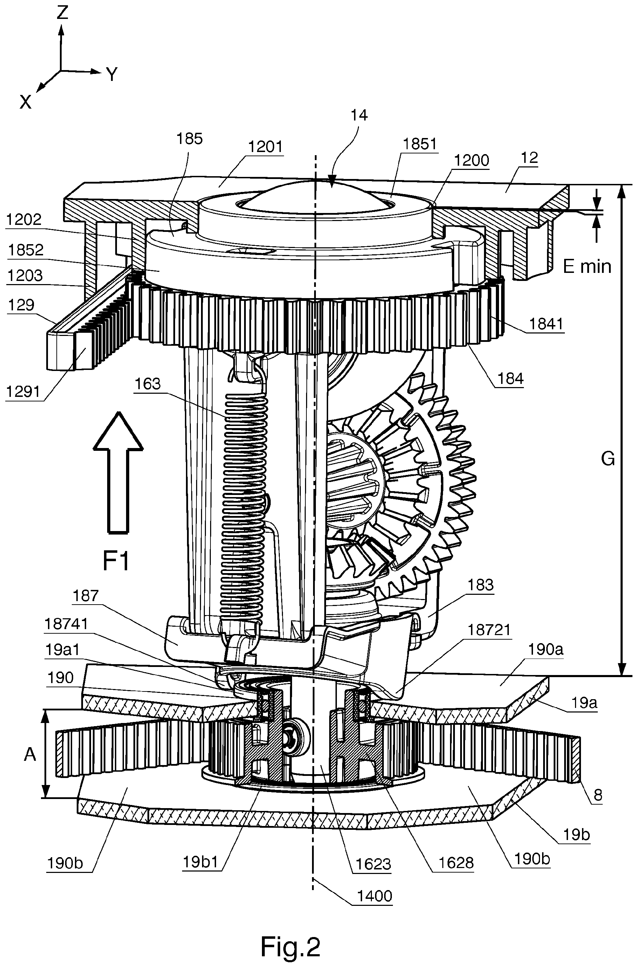

Die Figur 1 zeigt eine perspektivische Darstellung einer Anlegestation mit einer Anzahl an Transportelementen, von vorn links oben. Die Anlegestation 10 weist eine vertikale Ausrichtwand 11 in einer x/z-Ebene und ein Anlegedeck 12 in einer x/y-Ebene eines kartesischen Koordinatensystems auf. Die Länge L und die Breite W des Anlegedecks 12 entsprechen höchstens dem Format des größten flachen Guts (Poststücks) das an die Anlegestation 10 angelegt werden kann. Die x/y-Ebene des Anlegedecks 12 liegt in einem Abstand K über einer Tischplatte (nicht gezeigt) und die vertikale Ausrichtwand 11 ragt über das Anlegedeck 12 um eine Höhe von ca. 2K hinaus bis zu einer Gehäuseoberfläche 1100 an der oberen Kante der Ausrichtwand 11. Letztere weist ein erstes Führungslangloch 1110 und ein zweites Führungslangloch 1120 in der Ausrichtwand 11 auf. Am oberen Rand des ersten Führungslanglochs 1110 ist eine Abzweigöffnung 1111 und ebenso am oberen Rand des zweiten Führungslanglochs 1110 ist eine Abzweigöffnung 1121 vorgesehen die entgegen der x-Richtung abzweigt, in welche eine Andruckgabel 123 abgelegt werden kann, um einen Stapel an flachen Gütern per Hand anzulegen. Die maximale Spannweite einer menschlichen Hand beträgt <2K und ebenso die Stapelhöhe, weshalb ein Stapel bequem unter der abgelegten Andruckgabel 123 an die Ausrichtwand 11 angelegt werden kann. Die Oberseite 120a des Anlegedecks 12 ist strukturiert und weist drei Inseln 1206 für nichtangetriebene freidrehende Kugeln 122 auf, die jeweils mittels einer Lagerschale 12061 auf einer Position gehalten werden, wobei zwei Positionen poststromeingangsseitig liegen und eine Position nahe der Frontseite der Anlegestation liegt. Eine einzelne Insel 1204 liegt poststromeingangsseitig nahe der linken vorderen Ecke auf der Oberseite 120a des Anlegedecks 12. Sie hat eine kreisförmige zentrale Öffnung 12041 in der Inselmitte für ein angetriebenes Transportelement 14, das noch in einem posteingangsseitigen Bereich der Anlegestation liegt. Auf der Oberseite des Auflegedecks sind Rippen 1207 in Transportrichtung angeordnet. Die Oberseite 120a des Anlegedecks 12 geht in Transportrichtung in ein Plateau über. Am Übergang endet der posteingangsseitige Bereich der Anlegestation. Eine glatte Oberfläche 1201 des Plateaus auf der Auflegedeckoberseite weist eine Anzahl von kreisförmigen Öffnungen 1200 in einer vorbestimmten Anordnung auf. Jedes der Transportmodule 1 (Fig. 2) trägt ein Transportelement 14. Die Transportelemente 14 für flache Güter ragen durch die kreisförmige zentrale Öffnung 12041 in der Inselmitte und durch die Öffnungen 1200. An der poststromeingangsseitigen Kante des Anlegedecks ist ein Kragen 1205 mit einer Öffnung 12050 für ein Einstellmittel 121 zur Lageausrichtung der Transportmodule 1 angeordnet. Ein Auslösesensor ist poststromausgangsseitig nahe der Kante zwischen der Ausrichtwand 11 und dem Anlegedeck 12 angeordnet. In der Ausrichtwand 11 ist ein Langloch 1101 für ein Empfangsmittel und eine kreisförmige Öffnung 12001 ist im Anlegedecks 12 für ein Sendemittel des Auslösesensors vorgesehen. Optional können weitere (nicht gezeigte) Sensoren in kreisförmigen Öffnungen 12002 bis 12004 des Anlegedecks 12 angeordnet sein, wobei die Sensoren zur Feststellung der Position des flachen Gutes bzw. des Angelegtseins des untersten flachen Gutes eines Stapels vorgesehen sind.

Die Figur 2 zeigt eine perspektivische Darstellung eines Ausschnitts einer Anlegestation mit einem montierten Transportmodul, von rechts oben, wobei das Transportmodul 1 ein Transportelement 14 für flache Güter trägt, welches am Kopf des Transportmoduls montiert ist und durch die kreisförmigen Öffnung 1200 des Anlegedecks 12 hindurch ragt. Der Abstand E der Oberfläche 1201 des Anlegedecks 12 zu einer Oberfläche 1851 eines Halterings 185 ist minimal und das montierte Transportmodul befindet sich in einem ersten Zustand ohne Reibwertbegrenzung. Ein Transportelementträger 18 des Transportmoduls 1 ist zwischen dem Anlegedeck 12 der Anlegestation und einer zwischendeckartig angeordneten Lagerplatte 19a angeordnet, wobei sich die zur Reibwertbegrenzung wirksamen Hebelenden 18721, 18741 eines Hebels 187 an einer Oberfläche 190a der Lagerplatte 19a abstützen, so dass das Transportmodul aufgrund der Kraft F1 der Zugfeder 163 in z-Richtung maximal angehoben wird. Ein Abstand G der Oberfläche 1201 des Anlegedecks 12 zur Oberseite der Lagerplatte 19a ohne dem Überstand des Transportelements 14 über die Oberfläche des Halterings 1851 entspricht der Länge des montierten Transportmoduls in z-Richtung in dem ersten Zustand ohne Reibwertbegrenzung, wobei gilt G < K. Der Haltering 185 verhindert das Herausfallen des Transportelements 14 aus dem Innenraum des Trägerrings 184.

Ein ringförmiger Kragen am Aussendurchmesser 1852 der unteren kreisförmigen Scheibe des Halterings 185 ist als kopfseitiges Lager ausgebildet, welches innerhalb eines an der Unterseite des Anlegedecks 12 angeformten kreisrunden Lagerring 1202 gelagert ist. Ein fußseitiges erstes Lager 19a1 ist in einem Lagerloch 190 der Lagerplatte 19a angeordnet, wobei in dem ersten Lager 19a1 ein zylinderförmiger Absatz einer Zahnriemenscheibe 1628 drehbar gelagert und eine Antriebswelle 1623 des Transportmoduls verschiebbar in einer zentralen Öffnung der Zahnriemenscheibe 1628 gelagert ist. Das Lager 19a1 soll eine geringe Reibung aufweisen, vorzugsweise wird ein Kugellager eingesetzt. Die Zahnriemenscheibe 1628 weist einen Zahnriemenscheibenrand 16281 mit einem größeren Durchmesser auf, als der Durchmesser der Zahnriemenscheibe. Alle Zahnriemenscheiben sind gleich aufgebaut. Im ersten Lager 19a steckt der zylinderförmige Absatz der Zahnriemenscheibe 1628 und auch das zylinderförmige Formstück auf der gegenüberliegenden Seite steckt ebenfalls in einem zweiten Lager 19b1, dass in einem zweiten Lagerloch einer Gegenlagerplatte 19b angeordnet ist und wodurch die Zahnriemenscheibe 1628 drehbar gelagert wird. Auch das zweite Lager 19b1 soll eine möglichst geringe Reibung aufweisen, vorzugsweise wird ebenfalls ein Kugellager eingesetzt. Die Oberseite 190b der Gegenlagerplatte 19b verdeckt zwar in der Darstellung das zylinderförmige Formstück und das zweiten Lager 19b1 jedoch sind diese beiden Lager in ihren Abmaßen gleich.

Eine (nicht gezeigte) Bewegungsmechanik zur Veränderung der Ausrichtung von einigen der Transportelemente 14 umfasst eine Zahnstange 129. Die Zahnstange 129 weist mindestens eine einseitige Verzahnung 1291 auf, die sich mit den Zähnen eines ringförmigen Außenzahnkranz 1841 des Trägerrings 184 in Eingriff befinden. Der Trägerring 184 dreht bei einer Bewegung der Zahnstange 129, die sich in einem Führungsraum bewegt, der in einer zur y-Richtung entgegengesetzten Richtung durch eine Führungswand 1203 begrenzt ist, die an der Unterseite des Anlegedecks 12 angeformt ist.

Alternativ zu dem Betätigungsmittel kann über eine Bewegungsmechanik ein Verstellmotor mit der Zahnstange 129 einer Lageausrichtungsmechanik mechanisch gekoppelt werden, wobei der Verstellmotor von einer Steuereinheit angesteuert wird.

Das Transportmodul ist um eine Achse der Antriebswelle 1623 drehbar gelagert und in Achsrichtung verschiebbar angeordnet, wobei die Antriebswelle 1623 auf der Lagerplatte 19a orthogonal stehend und in Achsrichtung parallel zur z-Richtung ausgerichtet ist. Die Drehachse 1400 des Transportmoduls ist zugleich die Achse der Antriebswelle 1623.

Unterhalb des Anlegedecks 12 ist ein Raum für die Antriebsmechanik vorgesehen. Ein Raum wird in z-Richtung begrenzt durch den ersten Abstand A zwischen der Lagerplatte 19a und der Gegenlagerplatte 19b und ist für einen gemeinsamen Antrieb einer Vielzahl von Transportmodulen vorgesehen. Der gemeinsame Antrieb umfaßt eine Antriebseinheit und beispielsweise einen Zahnriemen 8 und die Zahnriemenscheibe 1628. Die zentrale Öffnung der Zahnriemenscheibe 1628 weist eine Formkontur in axialer Richtung auf, in welcher die Antriebswelle 1623 des Transportmoduls formschlüssig aber in der axialen Richtung (z-Richtung) leicht verschiebbar gelagert ist.

In einem zweiten Zustand des montierten Transportmoduls existiert eine Reibwertbegrenzung. Der Hebel 187 liegt nun (in einer nicht gezeigten Weise) auf der Oberseite 190a der Lagerplatte 19a maximal auf. Der Abstand E zwischen der Oberfläche 1201 des Anlegedecks 12 und der Oberfläche 1851 einer oberen kreisförmigen Scheibe des Halterings 185 wird maximal, weil der Transportmodul in dem Falle, in welchem eine durch den Stapel ausgeübte Andruckkraft größer als die Federkraft F1 ist, nicht mehr aufgrund der Kraft F1 der Federmittel 163 in z-Richtung angehoben wird. Das Transportelement 14 sinkt in Schwerkraftrichtung herab, so dass das Transportelement 14 nicht mehr über die Oberfläche des Anlegedecks 1201 hinaus ragt. Die minimale Länge des montierten Transportmoduls in z-Richtung in dem zweiten Zustand entspricht einer Differenz des Abstands G der Oberfläche des Anlegedecks 1201 zur Oberseite 190a der Lagerplatte 19a minus dem Hub bei maximalen Abstand E zwischen der Oberfläche 1201 des Anlegedecks 12 und der Oberfläche 1851 der oberen kreisförmigen Scheibe des Halterings 185. Der Trägerring 184 geht in Schwerkraftrichtung in zwei Seitenschenkel des Transportelementträgers über, welche sich in einem Joch 183 vereinigen, welche eine zentrale Öffnung (nicht dargestellt) aufweist. Die Antriebswelle 1623 des Transportmoduls ragt aus der Öffnung (nicht sichtbar) des Jochs 183 aus dem Transportmodul in einer Länge hervor, die der Summe des Abstands A und des Hubes bei maximalen Abstand E entspricht.

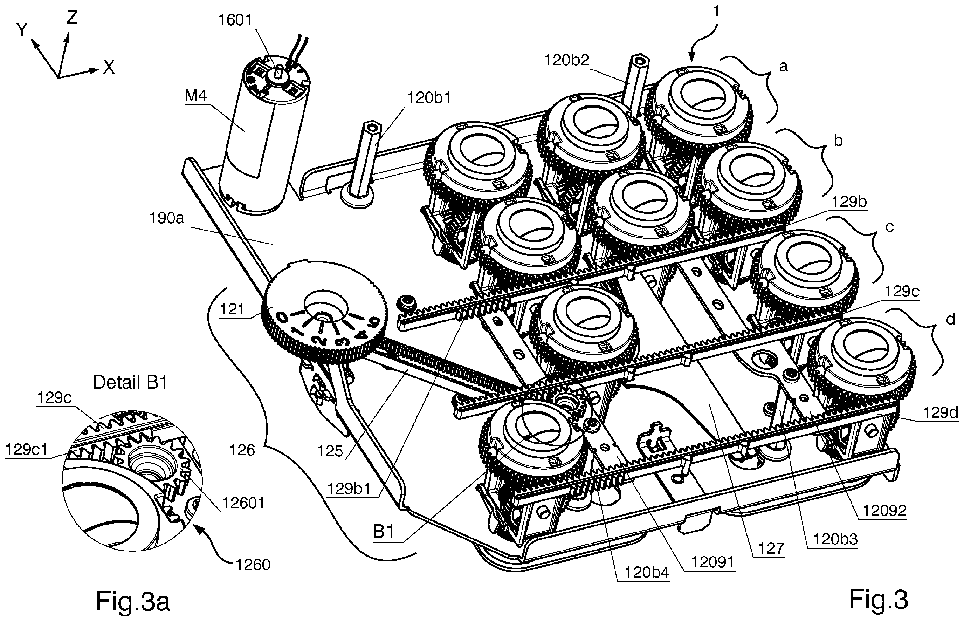

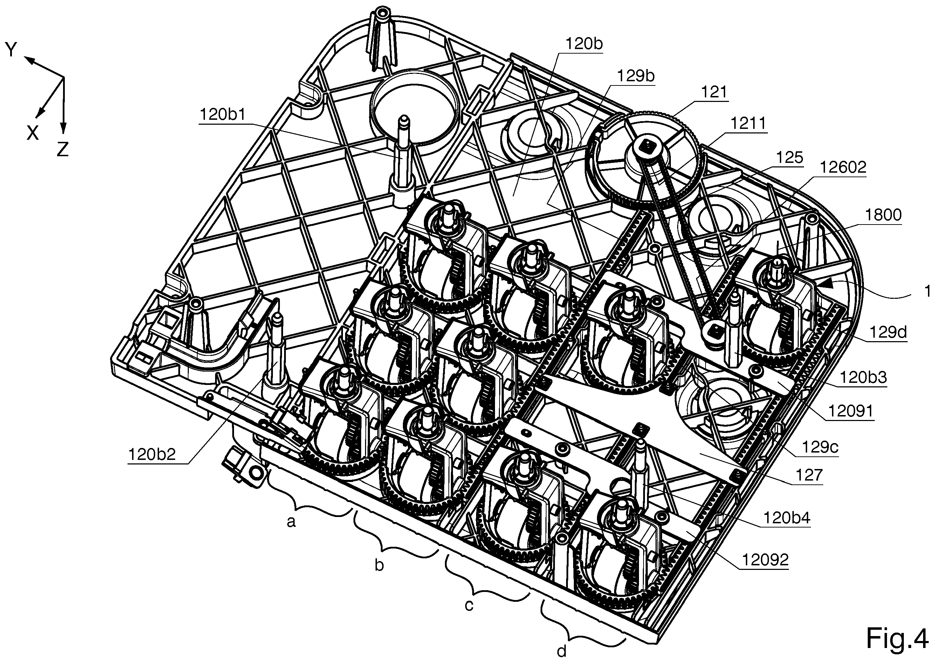

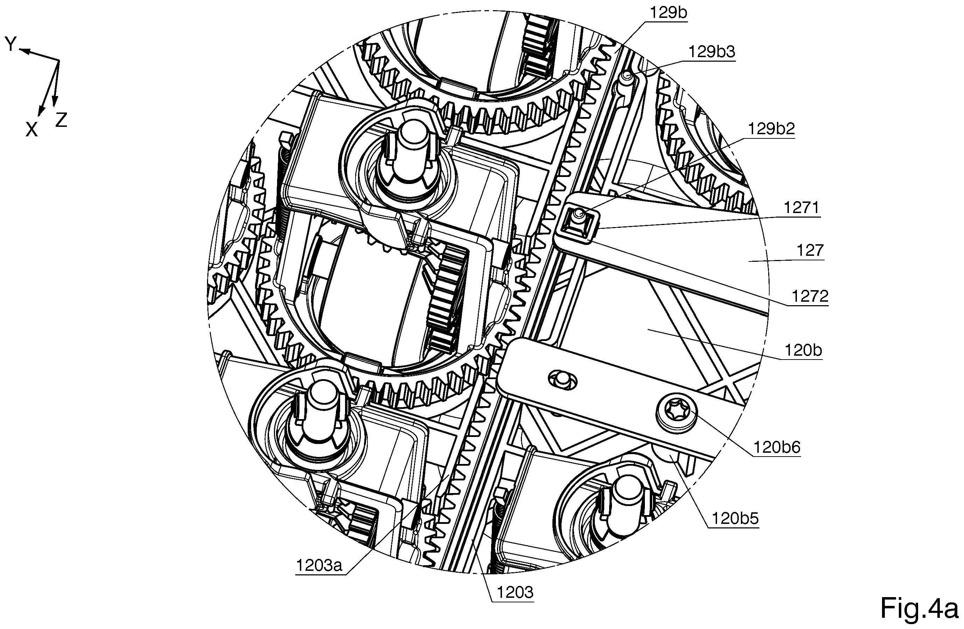

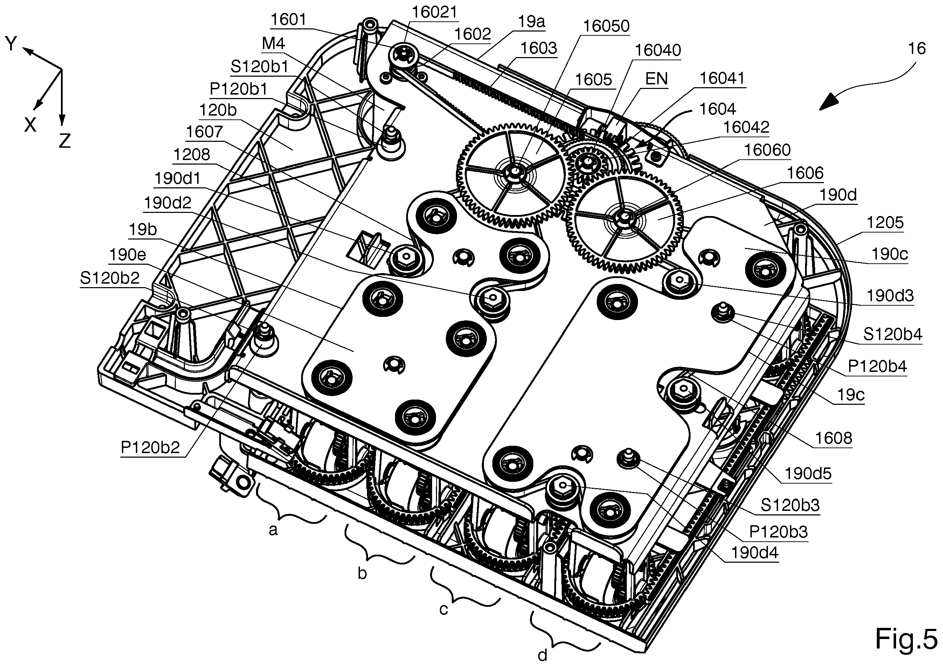

Die Figur 3 zeigt eine perspektivische Darstellung einer Anzahl von auf einer Oberseite einer Lagerplatte montierten Transportmodulen, von vorn links oben. An der Peripherie Oberseite 190a der Lagerplatte sind ein Motor M4, ein Einstellmittel 121 und vier Distanzstücke 120b1 bis 120b4 angeordnet, die sich in z-Richtung erstrecken. Der Motor M4 hat eine Motorwelle 1601 für den Antrieb der Transportelemente, wobei die Antriebsmittel (nicht sichtbar) unterhalb der Lagerplatte 19a angeordnet sind (siehe Fig.5). Die Transportmodule 1 sind in Reihen a, b, c und d angeordnet. Die Transportmodule 1 der Reihen a und b sind in einem Sechserblock angeordnet. Die Reihe a und b enthalten jeweils drei Transportmodule 1. Die Transportmodule 1 der Reihen c und d sind in einem Viererblock angeordnet. Die Reihe c und d enthalten jeweils zwei Transportmodule 1, dabei jeweils einen am Anfang und einen am Ende der Reihe. Zwischen den Reihen b und c ist eine Zahnstange 129b, und zwischen den Reihen c und d ist eine Zahnstange 129c sowie nahe der Frontseite ist eine Zahnstange 129d einer Lageausrichtungsmechanik angeordnet. Die Zahnstangen 129 weisen auf der einen zur Ausrichtwand hin gerichteten Seite eine ununterbrochene Reihe an Zähnen auf, die sich in x-Richtung erstrecken und in die Zähne des ringförmigen Außenzahnkranzes 1841 der Transportmodule der Reihe b eingreifen. Eine gegenüberliegende Formkontur 129b1 auf der anderen Seite der Zahnstange weist ebenfalls Zähne auf, die jedoch nicht durchgehend auf der gesamten Zahnstangenlänge, sondern nur auf einem Teilstück der Zahnstange angeordnet sind. Die drei Zahnstangen 129 sind alle gleich aufgebaut und durch ein Verbindungsteil 127 miteinander gekoppelt, wobei das letztere zwischen zwei Halteblechen 12091 und 12092 für Zahnstangen 129 angeordnet ist. Die Haltebleche sind gleich aufgebaut und dienen als Träger- und Lagerblech für die Zahnstangen 129. Die Haltebleche sind an die Distanzstücke 120b3 und 120b4 geschraubt. Die Haltebleche weisen neben dem Befestigungsloch auch ein Montageloch auf. Eine Zahnriemenscheibe wird im Montageloch 12091 montiert, dessen Durch-messer dem Außendurchmesser eines abgesetzten Zylinders an einer Zahnriemenscheibe entspricht. Die Haltebleche weisen weitere Befestigungslöcher auf, zu ihrer Befestigung auf der Unterseite des Anlegedecks (siehe Fig.4). Die gegenüberliegende Formkontur 129b1 ist an dem einen Ende der Zahnstange angeordnet, das in einem Abstand näher zu dem Einstellmittel 121 liegt, als das andere Ende. Das Einstellmittel 121 ist mit einem Zahnriemen 125 gekoppelt und bildet ein Getriebe 126. Der Zahnriemen 125 wirkt mit einem Zwischengetriebe 1260 des Getriebes 126 der Lageausrichtungsmechanik zusammen. Das Zwischengetriebe ist im Montageloch des Halteblechs 12091 montiert und im Detail B1 in der Fig. 3a vergrößert dargestellt.

Die Figur 3a zeigt ein Detail B1 der Fig. 3 mit einem Zwischengetriebe 1260 der Lageausrichtungsmechanik. Das Zwischengetriebe 1260 der Lageausrichtungsmechanik 126 weist ein Zahnritzel 12601 auf, das einerseits in die Zähne der Formkontur der Zahnstange 129b eingreift und andererseits formschlüssig mit einer Zahnriemenscheibe 12602 (siehe Fig.4) verbunden ist. Der Zahnriemen 125 (siehe Fig.3) wirkt auf die ringförmig angeordneten Zähne der Zahnriemenscheibe 12602 zur Verstellung der Zahnstange 129b ein.

Die Figur 4 zeigt eine perspektivische Darstellung einer Unterseite des Anlegedecks mit montierten Transportmodulen. Die Länge der Antriebswelle 1623 ragt aus einer zentralen Öffnung des Jochs des Transportmoduls 1 hervor. Die Drehachse 1800 des Transportmoduls 1 verläuft durch den Mittelpunkt des Querschnitts der Antriebswelle 1623. Die Haltebleche 12091 und 12092 werden durch jeweils zwei Schrauben auf der Unterseite 120b des Anlegedecks befestigt. Somit sind die Zahnstangen 129b, 129c, 129d gegen ein Herausfallen gesichert.

Zur Führung der Zahnstangen 129 sind Führungswände auf der Unterseite des Anlegedecks angeformt. Das Verbindungsteil 127 koppelt die gleich aufgebauten Zahnstangen 129 miteinander, wobei die Zahnstangen 129 Ankoppelzapfen und das Verbindungsteil 127 Öffnungen für die Ankoppelzapfen aufweisen, durch die die Ankoppelzapfen hindurchragen. Das Verbindungsteil 127 wird mit Federmuttern (siehe Fig. 4a) auf den Ankoppelzapfen befestigt. Die vier Distanzstücke 120b1 bis 120b4 weisen ein Schraubenloch in einem Sechskantstück an ihrem einen Ende und an ihrem anderen Ende einen Zylinder mit abgesetzten Durchmesser auf. Die Zylinder ragen jeweils durch entsprechende Öffnungen in der Lagerplatte 19a hindurch, wenn die Lagerplatte montiert wurde (siehe Fig.3 und Fig.5). Die Zahnriemenscheibe 12602 des Zwischengetriebes 1260 der Lageausrichtungsmechanik 126 ist via Zahnriemen 125 mit einer Zahnriehmenscheibe 1211 gekoppelt, wobei die letztere mit dem Einstellmittel 121 zur Lageausrichtung formschlüssig verbunden ist. Die Reihen a und b der montierten Transportmodule bilden einen Sechserblock und die Reihen c und d der montierten Transportmodule bilden einen Viererblock. In der Fig.4 wurde der Einfachheit halber eine gleiche Ausrichtung aller Transportmodule dargestellt. Der Aufbau der Transportmodule und eine Anfangspositionierung der Transportmodule im Verlauf von deren Montage auf der Unterseite 120b des Anlegedecks 12 ermöglicht grundsätzlich unterschiedliche Ausrichtungen der Transportmodule zueinander. Es ist vorgesehen, dass zur Anfangspositionierung der fest positionierten Transportmodule in der Reihe a eine Ausrichtung der Transportmodule in einem ersten vorbestimmten Ausrichtungswinkel zur Transportrichtung x und zur Anfangspositionierung der variable positionierbaren Transportmodule in der Reihe b eine Ausrichtung der Transportmodule in einem zweiten vorbestimmten Ausrichtungswinkel zur Transportrichtung x vorgenommen wird. Für die Transportmodule in der Reihe c wird eine Ausrichtung der Transportmodule in einem dritten vorbestimmten Ausrichtungswinkel zur Transportrichtung x ermöglicht. Aber der Aufbau der Transportmodule gestattet auch innerhalb ei-ner Reihe eine beliebig unterschiedliche Anfangspositionierung der Transportmodule zueinander.

Die Figur 4a zeigt eine perspektivische Darstellung eines vergrößerten Ausschnitts der Unterseite des Anlegedecks mit montierten Transportmodulen, nach Fig.4. Die Unterseite 120b des Anlegedecks weist einen Befestigungsdom 120b5 für das Halteblech 12092 auf, das durch eine Schraube als Befestigungsmittel 120b6 befestigt ist. Das Verbindungsteil 127 weist eine Öffnung 1271 auf für den Ankoppelzapfen 129b2, der mittels einer Federmutter 1272 befestigt wird. Ein weiterer Ankoppelzapfen 129b3 bleibt hier ungenutzt. Die Ankoppelzapfen 129b2, 129b3 sind an der Zahnstange 129b angeformt, die in einer Führung auf der Unterseite 120b des Anlegedecks verschiebbar ist, wobei die Führung einerseits durch eine Führungswand 1203 und andererseits durch ein Wandstück 1203a begrenzt wird.

Die Figur 5 zeigt eine perspektivische Darstellung einer Anordnung zweier Gegenlagerplatten im Abstand zu der Lagerplatte und im Abstand zu der Unterseite des Anlegedecks. Auf der Unterseite 190d der Lagerplatte ist eine Antriebsmechanik 16 für einen gemeinsamen Antrieb aller Transportelemente angeordnet. Die Zylinder der Distanzstücke 120b1 und 120b2 ragt in einem geringen Abstand zu der Ausrichtwand durch entsprechende Öffnungen in der montierten Lagerplatte 19a entgegen der z-Richtung (in Schwerkraftrichtung) hindurch. Am Ende der Distanzstücke 120b1, 120b2 sind je eine Distanzhülse P120b1, P120b2 und je eine Sicherungsscheibe S120b1, S120b2 montiert. Die Zylinder der Distanzstücke 120b3, 120b4 ragen mit ihrem Ende durch die Lagerplatte und Gegenlagerplatte 19c des Viererblocks hindurch. Auf den Zylindern sind Distanzhülsen P120b3, P120b4 montiert, die die Lagerplatte 19a fixieren. Je eine Sicherungsscheibe S120b3, S120b4 ist am Ende der Zylinder der Distanzstücke 120b3, 120b4 befestigt.

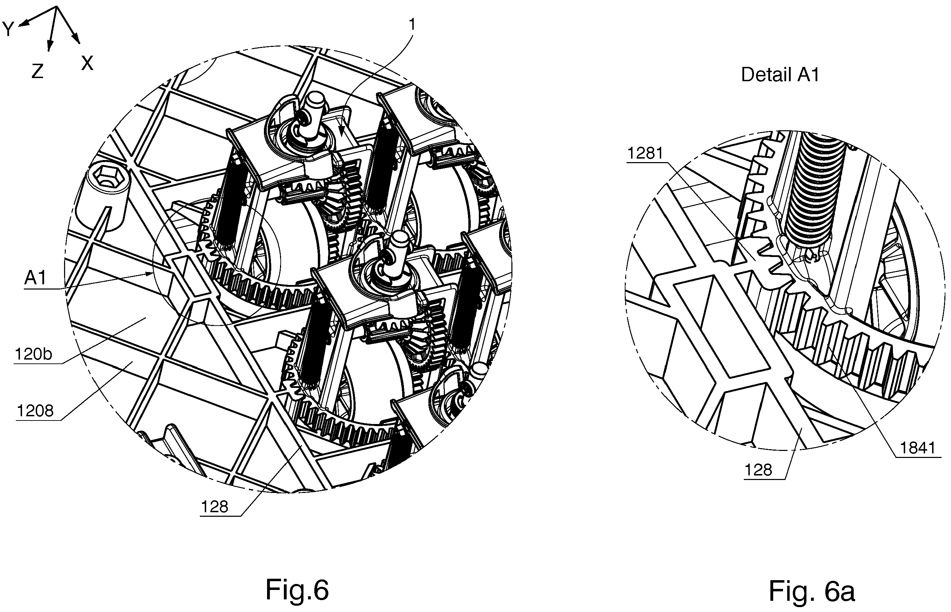

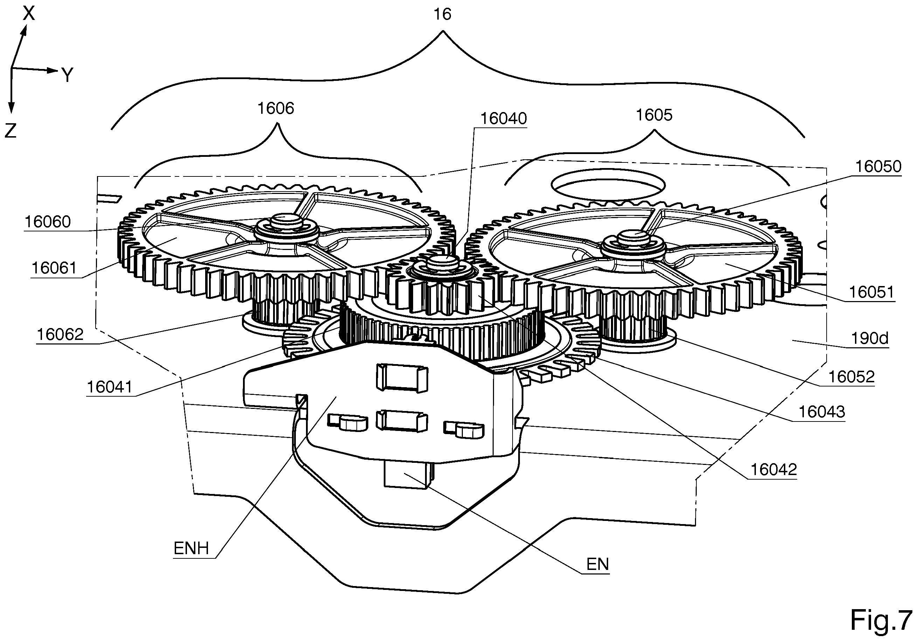

In einem Abstand neben dem Schraubenkörper des Distanzstücks 120b1 ragt die Motorwelle 1601 des Antriebsmotors M4 ebenfalls durch eine entsprechende Öffnungen in der montierten Lagerplatte 19a entgegen der z-Richtung (in Schwerkraftrichtung) hindurch. Eine Zahnriemenrolle 1602 ist mit der Motorwelle 1601 kraft- und/oder formschlüssig verbunden und so montiert, dass der Zahnriemenscheibenrand 16021 der Zahnriemenrolle 1602 auf einer von der Lagerplatte 19a abgewandten Seite zum Einsatz kommt, um während des Betriebes ein Abrutschen des Zahnriemens 1603 in Schwerkraftrichtung der Zahnriemenrolle 1602 zu verhindern. Zwischen der Öffnung 12050 in dem Kragen 1205 an der posteingangsseitigen Kante des Anlegedecks (Fig.1) und einer erdachten Linie zwischen den Distanzstücken 120b1 und 120b4 (Fig.5) liegt ein posteingangsseitiger Bereich der Anlegestation. Unter dem posteingangsseitigen Bereich der Anlegestation sind drei feststehende Lagerachsen 16040, 16050 und 16060 auf der Unterseite 190d der Lagerplatte 19a montiert worden, so dass diese sich entgegen der z-Richtung erstrecken. Die feststehende Lagerachse 16050 ist posteingangsseitig des Sechserblocks von Transportmodulen der Reihen a und b angeordnet und die feststehende Lagerachse 16060 ist posteingangsseitig des Viererblocks von Transportmodulen der Reihen c und d angeordnet. Die feststehende Lagerachse 16040 ist posteingangsseitig zwischen den Lagerachsen 16050 und 16060 des Viererblocks bzw. Sechserblocks und der posteingangsseitigen Kante des Anlegedecks angeordnet. Der Zahnriemen 1603 treibt eine erste Getriebestufe 1604 an, die eine große Zahnriemenscheibe 16041 und ein kleines Zahnrad 16042 aufweist, die beide mit einer Encoderscheibe formschlüssig verbunden sind, wobei die erste Getriebestufe 1604 auf der feststehenden Lagerachse 16040 drehbar gelagert ist und die Motordrehzahl untersetzt. Ein Encoder EN ist nahe der posteingangsseitigen Kante des Anlegedecks an der Encoderscheibe angeordnet. Eine zweite Getriebestufe 1605 ist für den Sechserblock vorgesehen und auf der feststehende Lagerachse 16050 drehbar gelagert und eine zweite Getriebestufe 1606 ist auch für den Viererblock vorgesehen und auf der feststehende Lagerachse 16060 drehbar gelagert, wobei durch die zweiten Getriebestufen und die Motordrehzahl weiter untersetzt wird. Die zweite Getriebestufe 1605 bzw. 1606 besteht aus einem großen Zahnrad 16051 bzw. 16061 und einer kleinen Zahnriemenscheibe 16052 bzw. 16062, die miteinander formschlüssig verbunden und auf der feststehenden Lagerachse 16050 bzw. 16060 drehbar gelagert sind, um die Motordrehzahl zu untersetzen. Der Zahnriemen 1603 befindet sich mit der großen Zahnriemenscheibe 16041 und das keine Zahnrad 16042 befindet sich mit den großen Zahnrädern 16051, 16052 im Eingriff (Fig.7). Auf den kleinen Zahnriemenscheiben 16052 bzw. 16062 läuft ein Zahnriemen 1607 bzw. 1608, der die Zahnriemenscheiben des Sechserblocks bzw. des Viererblocks antreibt (Fig.5). Am Sechserblock bzw. Viererblock sind jeweils eine Riemenspannrolle 190d1 bzw. 190d5 und Umlenkrolle 190d2 bzw. 190d3, 190d4 für den Zahnriemen 1607 bzw. 1608 vorgesehen. Zwischen der Lagerplatte 19a und der Gegenlagerplatte 19b sind die Zahnriemenscheiben des Sechserblocks angeordnet und zwischen der Lagerplatte 19a und der Gegenlagerplatte 19c sind die Zahnriemenscheiben des Viererblocks angeordnet. Die Gegenlagerplatte 19b bzw. 19c weist eine Unterseite 190e bzw. 190c auf, in die kreisrunde Öffnungen für die Lager der Zahnriemenscheiben eingearbeitet sind. Die Lagerplatte 19a weist ebensolche Öffnungen für die Lager der Zahnriemenscheiben auf (siehe Fig.2). Auf der Unterseite 120b des Anlegedecks sind diagonale Versteifungswände 1208 zwischen parallelen Versteifungswänden 128 (siehe Fig.6) angeordnet.

Die Figur 6 zeigt eine perspektivische Darstellung eines Ausschnitts der Unterseite des Anlegedecks. Eine Versteifungswand 128 stabilisiert das Anlegedeck im Randbereich des Sechserblocks von Transportmodulen 1 und gestattet bei der Montage eine Ausrichtung der Transportmodule (siehe Detail A1).

Die Figur 6a zeigt ein Detail A1 der Fig. 6. An der Versteifungswand 128 ist eine Zahnkontur 1281 angeformt, die mit den Zähnen des ringförmigen Außenzahnkranzes 1841 des Trägerrings des Transportelementträgers eines fest positionierbaren Transportmoduls in Eingriff gebracht ist.

Die Figur 7 zeigt eine perspektivische Darstellung eines Ausschnitts der Unterseite der Lagerplatte mit einem Getriebe der Antriebmechanik 16. Auf der Unterseite 190d der Lagerplatte ist ein Encoderhalter ENH für den Encoder EN montiert, wobei der Encoder EN in Transportrichtung auf die Encoderscheibe 16043 gerichtet ist, die mit dem kleinen Zahnrad 16042 und der großen Zahnriemenscheibe 16041 ein Bauteil einer ersten Getriebestufe bildet, das auf einer feststehenden Achse 16040 drehbar montiert ist und wobei sich die Zähne des kleinen Zahnrads 16042 mit den Zähnen der großen Zahnräder 16051 und 16061 in Eingriff befinden. Die letztgenannten sind auf feststehenden Achsen 16050 und 16060 drehbar montiert und bilden die zweiten Getriebestufen 1605 und 1606.

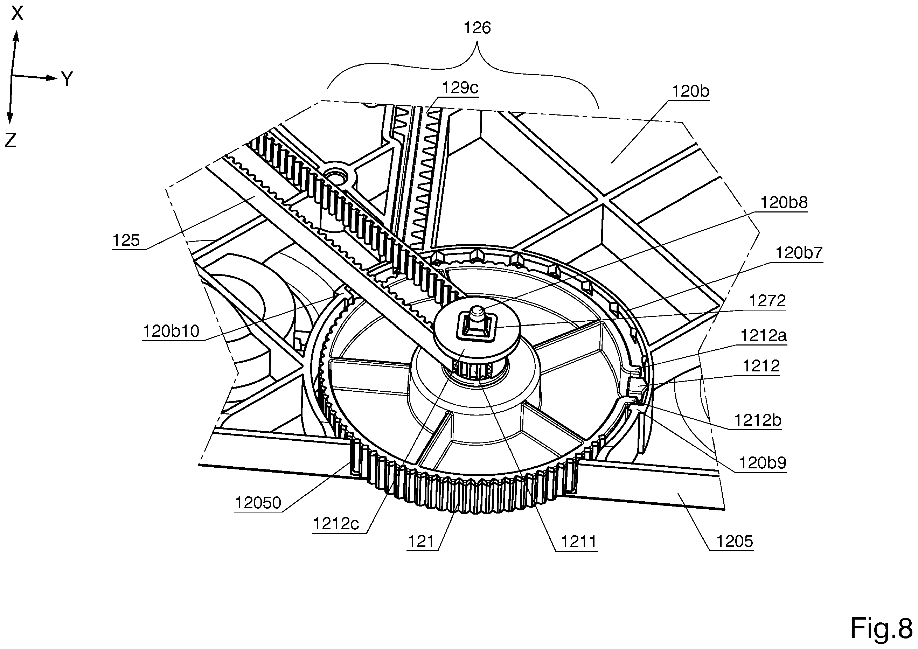

Die Figur 8 zeigt eine perspektivische Darstellung eines Ausschnitts der Unterseite 120b des Anlegedecks 12 mit einem Getriebe 126 einer Lageausrichtungsmechanik, wobei die letztgenannte über ein Zwischengetriebe eine Verschiebung einer Zahnstange 129c, und damit eine Änderung der Ausrichtung der Transportmodule bewirkt. Das Einstellmittel 121 ist formschlüssig mit einer Zahnriemenscheibe 1211 verbunden. Beide weisen eine zentrale Lagerbohrung auf. Ein Lagerdom 120b8 ist an der Unterseite 120b des Anlegedecks angeformt. Das Einstellmittel 121 und die Zahnriemenscheibe 1211 sind auf den Lagerdom 120b8 aufgesteckt und drehbar mittels einer Scheibe 1212c sowie einer Federmutter 1272 befestigt. Die Zahnriemenscheibe 1211 ist mit einem Zahnriemen 125 gekoppelt, der die Drehbewegung an das Zwischengetriebe überträgt (Fig.3a).

Die vorgenannten - in der Figur 8 dargestellten - Mittel bilden ein Getriebe 126 zur Übersetzung der Drehbewegung am Aussenumfang des Einstellmittels 121, das hier als Rad ausgebildet ist. Am Radaussenumfang ist eine Rastnase 1212 federnd angeformt. Beidseitig der Rastnase sind Anschlagwände 1212a und 1212b am Radaussenumfang angeformt. Der Kragen 1205 geht beidseitig der Öffnung 12050 in eine Kreissegmentwand 120b7 mit je einem Endanschlag 120b9 und 120b10 über. Zwischen den Endanschlägen sind Rastkerben auf der Innenseite der Kreissegmentwand 120b7 eingeformt, in welche die Rastnase 1212 federnd in Eingriff gelangt, wenn das Rad manuell gedreht wird, wodurch für die Transportmodule eine Winkellage von 0° bis 45° zur Transportrichtung in Stufen von beispielsweise 4,5° einstellbar ist.

Das Einstellmittels 121 kann alternativ - in nicht dargestellter Weise - auch als Hebel mit Kreissegment ausgebildet sein. Das Rad oder der Hebel ragen aus der Öffnung 12050 des Kragens 1205 an der posteingangsseitigen Kante des Anlegedecks und dienen zur manuellen Einstellung des Ausrichtwinkels.

In einer anderen Alternative wird auf der Antriebswelle eines Verstellmotors eine Zahnscheibe befestigt, auf der ein Riemen 125 der Lageausrichtungsmechanik läuft. Der Verstellmotor kann beispielsweise ein Schrittmotor sein. Die Zahnscheibe eignet sich zur automatischen Einstellung des Ausrichtwinkels, bei der die Winckelverstellung durch eine Steuereinheit mit einem Programm zur elektrischen Ansteuerung des Schrittmotors in Abhängigkeit von Erfordernissen erreicht wird, wobei weitere Sensoren angeordnet sind, die die Erfordernisse detektieren und ein Speichermittel vorgesehen ist, in welchem eine Software zur Auswertung der Erfordernisse gespeichert ist. Eine Anordnung von Sensoren kann auf dem Anlegedeck 12 und/oder an der Ausrichtwand 11 der Anlegestation 10 vorgesehen sein, wobei die Sensoren mit den Mitteln zur Steuerung der Transportgeschwindigkeit elektrisch verbunden sind, wobei die vorgenannten Mittel mindestens eine Steuereinheit enthalten.

Es ist vorgesehen, dass der Schrittmotor mit der Steuereinheit über eine Schnittstelleneinheit elektrisch verbunden ist, um die Bewegung des jeweils untersten der flachen Güter eines Stapels durch die von den Transportelementen in y-Richtung ausgeübte Traktion zu steuern. Bei einem Einsatz des Schrittmotors kann wegen einer kleinen Schrittweite die Einstellgenauigkeit vorteilhaft erhöht werden, da jede Stufe kleiner ausfallen wird und die Stufenanzahl entsprechend erhöht ist. Die Rastnase kann dann entfallen.

## Patentansprüche

1. Anlegestation, zum Anlegen von flachem Gut und zu dessen Zuführung zu einer Vereinzelungsstation, mit einer Vielzahl von Transportelementen, die jeweils durch eine zugehörige Öffnung in einem Anlegedeck (12) der Anlegestation (10) in einer z-Richtung eines kartesischen Koordinatensystems hindurchragen, wobei alle Transportelemente durch einen einzigen Antriebsmotor via Zahnriemenscheiben und Zahnriemen angetrieben werden, wobei
- mindestens ein Auslösesensor poststromausgangsseitig in der Anlegestation angeordnet ist, wobei der Auslösesensor und der Antriebsmotor mit Mitteln zur Steuerung der Transportgeschwindigkeit der flachen Güter elektrisch verbunden ist, die in Transportrichtung x durch die Transportelemente (14) transportiert werden,
- jedes Transportelement, von einem Transportmodul getragen wird, dass die Anlegestation (10) mit einer Vielzahl von Transportmodulen ausgestattet ist, die jeweils mit einem kopfseitig montierten Transportelement durch eine zugehörige Öffnung in einem Anlegedeck (12) der Anlegestation (10) in einer z-Richtung eines kartesischen Koordinatensystems hindurchragen, **dadurch gekennzeichnet, dass**
- die Ausrichtung der Traktion vor oder während des Betriebes der Anlegestation durch eine Drehung mindestens eines Transportmoduls veränderbar ist,
- ein jedes Transportelement (14) einen balligen runden oder tonnenförmigen Körper mit einem Äquator aufweist, wobei beidseitig des Äquators ein unterschiedlicher Reibwert des vorgenannten Körpers des Transportelements (14) vorgesehen ist,
- die Transportmodule in einer solchen Ausrichtung positioniert sind, so dass die Körperhälfte des Transportelements mit dem höhen Reibwert der Ausrichtwand (11) am nächsten liegt und
- die Transportmodule entgegen einer Federkraft (F1) unter das Anlegedeck (12) in Schwerkraftrichtung absenkbar angeordnet sind.

2. Anlegestation, nach Anspruch 1, **gekennzeichnet dadurch, dass** in einem minimalen Abstand zur Ausrichtwand der Anlegestation eine Reihe (a) von in einer Ausrichtung festpositionierbaren Transportmodulen und in einem weiteren bis zu einem maximalen Abstand zur Ausrichtwand weitere Reihen (b, c, d) von in der Ausrichtung variabel positionierbaren Transportmodulen angeordnet sind, wobei sich jede Reihe in eine Transportrichtung x des kartesischen Koordinatensystems erstreckt, die Reihe c der Reihe d, und die Reihe b der Reihe c sowie die Reihe a der Reihe b in y-Richtung des kartesischen Koordinatensystems benachbart ist und dass die Reihen b, c, d von in der Ausrichtung variabel positionierbaren Transportmodulen einerseits zur Ausrichtung von flachen Gütern an der Ausrichtwand vorgesehen sind, welche von einer vorgeschalteten Kuvertierstation einzeln und nacheinander auf das Anlegedeck der Anlegestation ausgeworfen werden und dass andererseits die Reihen b, c, d zum Ausrichten eines Stapels klein- oder großformatiger flacher Güter mit unterschiedlicher Dicke und Formatabweichungen vorgesehen sind, der an die Anlegestation angelegt wird.

3. Anlegestation, nach den Ansprüchen 1 bis 2, **gekennzeichnet dadurch, dass** alle variabel positionierbaren Transportmodule über eine Verzahnung mit einer Stellmechanik selbsthemmend in ihren verschiedenen Winkelpositionen miteinander verbunden sind, wobei die Stellmechanik ein Getriebe (126) aufweist.

4. Anlegestation, nach den Ansprüchen 1 bis 3, **gekennzeichnet dadurch, dass** ein Einstellmittel (121) zur Lageausrichtung vorgesehen ist, um die Transportmodule durch eine mechanische Verstellung in eine Winkellage zur Transportrichtung zu drehen.

5. Anlegestation, nach den Ansprüchen 1 bis 4, **gekennzeichnet dadurch, dass** das Einstellmittel (121) als Rad oder Hebel mit Kreissegment ausgebildet ist.

6. Anlegestation, nach Anspruch 5, **gekennzeichnet dadurch, dass** eine Verstellung des Ausrichtungswinkels von 0° bis 45° zur Transportrichtung x in festen Stufen vorgesehen ist.

7. Anlegestation, nach Anspruch 6, **gekennzeichnet dadurch, dass** jede Stufe bei der Verstellung in festen Stufen von je einem Winkelsegment in einem Bereich von 3° bis 9° entspricht.

8. Anlegestation, nach den Ansprüchen 1 bis 3, **gekennzeichnet dadurch, dass** die Stellmechanik Bestandteil einer Lageausrichtungsmechanik ist.

9. Anlegestation, nach Anspruch 8, **gekennzeichnet dadurch, dass** die Lageausrichtungsmechanik Zahnstangen (129) aufweist, die miteinander über ein Verbindungsteil (127) mechanisch gekoppelt sind, wobei jede Zahnstange (129) mindestens einseitig angeordnete Zähne (1291) aufweist, die sich mit den Zähnen eines ringförmigen Außenzahnkranzes (1841) des Trägerrings (184) in Eingriff befinden.

10. Anlegestation, nach Anspruch 1, **gekennzeichnet dadurch, dass** eine Anordnung von Sensoren auf dem Anlegedeck (12) und/oder an der Ausrichtwand (11) der Anlegestation (10) vorgesehen ist, dass ein Encoderhalter (ENH) für ein Encoder (EN) an der Unterseite (190d) einer Lagerplatte (19a) angeordnet ist und dass die Sensoren und der Encoder (EN) mit den Mitteln zur Steuerung der Transportgeschwindigkeit elektrisch verbunden sind, wobei die vorgenannten Mittel mindestens eine Steuereinheit einschließen.

11. Anlegestation, nach Anspruch 10, **gekennzeichnet dadurch, dass** die Steuereinheit in der Anlegestation und/oder in einer poststromabwärts nachfolgenden Gutverarbeitungsstation angeordnet ist und dass die Sensoren und der Antriebsmotor über Schnittstellen mit der Steuereinheit verbunden sind.

12. Anlegestation, nach den Ansprüchen 1 bis 4, **gekennzeichnet dadurch, dass** das Einstellmittel (121) als Zahnscheibe ausgebildet ist, die auf der Antriebswelle eines Verstellmotors befestigt ist.

13. Anlegestation, nach Anspruch 12, **gekennzeichnet dadurch, dass** der Verstellmotor ein Schrittmotor ist, der mit einer Steuereinheit über eine Schnittstelleneinheit elektrisch verbunden ist, um die Bewegung des jeweils untersten der flachen Güter eines Stapels durch die von den Transportelementen in y-Richtung ausgeübte Traktion zu steuern.

14. Anlegestation, nach Anspruch 1, **gekennzeichnet dadurch, dass** ein Auslösesensor zur Erfassung des Anlegens eines Stapels oder einzelnen flachen Guts, ein Encoder und mindestens ein weiterer Sensor zur Erfassung einer fehlerhaften Lageausrichtung des Stapels oder einzelnen flachen Guts vorgesehen sind und die Sensor- und die Encodersignale der Anlegestation durch die Steuereinheit abgefragt werden.

15. Anlegestation, nach Anspruch 14, **gekennzeichnet dadurch, dass** der Auslösesensor zur Erfassung einer fehlerhaften Lageausrichtung des Stapels oder einzelnen flachen Guts mitverwendet wird.

16. Anlegestation, nach Anspruch 2, **gekennzeichnet dadurch, dass** eine Anfangspositionierung der Transportmodule während deren Montage auf der Unterseite (120b) des Anlegedecks (12) vorgesehen ist.

17. Anlegestation, nach Anspruch 16, **gekennzeichnet dadurch, dass** zur Anfangspositionierung der fest positionierten Transportmodule in der Reihe (a) eine Ausrichtung der Transportmodule in einem ersten vorbestimmten Ausrichtungswinkel zur Transportrichtung x und zur Anfangspositionierung der variable positionierbaren Transportmodule in der Reihe (b) eine Ausrichtung der Transportmodule in einem zweiten vorbestimmten Ausrichtungswinkel zur Transportrichtung x vorgenommen wird.

18. Anlegestation, nach Anspruch 16, **gekennzeichnet dadurch, dass** die Anfangspositionierung der Transportmodule beliebig unterschiedlich ist.

19. Verfahren, zum Anlegen von flachem Gut und zu dessen Zuführung zu einer Vereinzelungsstation, mit Ausstatten einer Anlegestation mit einer Vielzahl von Transportelementen, die jeweils durch eine zugehörige Öffnung in einem Anlegedeck (12) der Anlegestation (10) in einer z-Richtung eines kartesischen Koordinatensystems hindurchragen, mit einem Antrieb von allen Transportelementen durch einen einzigen Antriebsmotor via Zahnriemenscheiben und Zahnriemen, mit den Schritten:
- Steuerung der Transportgeschwindigkeit der flachen Güter, wobei mindestens ein Auslösesensor, der poststromausgangsseitig in der Anlegestation angeordnet ist, und der Antriebsmotor mit Mitteln zur Steuerung der Transportgeschwindigkeit der flachen Güter elektrisch verbunden sind, um die flachen Güter in Transportrichtung x durch die Transportelemente (14) zu transportieren,
- Ausstatten der Anlegestation (10) mit einer Vielzahl von Transportmodulen, wobei jedes Transportelement von einem Transportmodul getragen wird, die jeweils mit einem kopfseitig montierten Transportelement durch eine zugehörige Öffnung in einem Anlegedeck (12) der Anlegestation (10) in einer z-Richtung eines kartesischen Koordinatensystems hindurchragen, **gekennzeichnet durch** die Schritte:
- Verändern der Ausrichtung der Traktion vor oder während des Betriebes der Anlegestation durch eine Drehung mindestens eines Transportmoduls,
- Vorsehen eines unterschiedlichen Reibwerts beidseitig eines Äquators eines Körpers des Transportelements (14), wobei ein jedes Transportelement (14) einen balligen runden oder tonnenförmigen Körper mit einem Äquator aufweist,
- Positionieren der Transportmodule in einer solchen Ausrichtung, so dass die Körperhälfte des Transportelements mit dem höheren Reibwert der Ausrichtwand (11) am nächsten liegt und
- Vorsehen einer Absenkbarkeit der Transportmodule entgegen einer Federkraft (F1) unter das Anlegedeck (12) in Schwerkraftrichtung.

20. Verfahren, nach Anspruch 19, **gekennzeichnet dadurch, dass** das Ausstatten der Anlegestation (10) mit einer Vielzahl von Transportmodulen die Schritte umfasst:
a) ein Ausstatten eines Auflegedecks einer Anlegestation mit Transportmodulen zur Kantenausrichtung und zum Transport von einzelnen oder in einem Stapel gestapelten flachen Gütern in Transportrichtung x zur Zuführung der flachen Güter zu einer stromabwärts liegenden Vereinzelungsstation, wobei die flachen Güter ein gleiches oder unterschiedliches Format aufweisen,
b) Ansteuerung eines gemeinsamen Antriebsmotors der Transportelemente, um ein automatisches Anlegen des Stapels an die Ausrichtwand in einer y-Richtung sowie einen Transport des Stapels in Transportrichtung x zur Zuführung der flachen Güter zu der Vereinzelungsstation zu ermöglichen, wobei eine erste Teilmenge der Transportelemente in einen minimalen Abstand zu der Ausrichtwand und eine zweite Teilmenge der Transportelemente in einen weiteren bis maximalen Abstand zu der Ausrichtwand wirksam ist, wobei der Abstand dem maximalen Format einsprechend so groß gewählt ist, dass die Transportelemente vom Rand bis zur Mitte eines flachen Guts mit maximalen Format wirksam sind, und
c) Durchführung eines gemeinsamen Einstellens einer Ausrichtung zwischen der x- und y-Richtung der zweiten Teilmenge der angetriebenen Transportelemente, um ein Ausrichten und einen Transport des Stapels oder eines flachen Guts in Transportrichtung zu ermöglichen.

## Claims

1. Placement station for placing flat items and feeding them to a singularization station, having a plurality of transport elements each of which extends through a related opening in a placement deck (12) of the placement station (10) in a z-direction of a Cartesian coordinate system, wherein all transport elements are driven by one single drive motor via toothed belt discs and toothed belts, **wherein**
- at least one trigger sensor is arranged in the placement station on the exit side of the mail-item flow, wherein the trigger sensor and the drive motor are electrically connected with means for controlling the transport speed of the flat items transported by the transport elements (14) in the transport direction x,
- each transport element is carried by a transport module, and that the placement station (10) is provided with a plurality of transport modules each of which extends with a transport element mounted on its head side through a related opening in a placement deck (12) of the placement station (10) in a z-direction of a Cartesian coordinate system, **characterized in that**
- the direction of traction can be changed by turning at least one transport module before or during operation of the placement station,
- each transport element (14) has a ball-shaped, round, or barrel-shaped body with an equator, wherein different friction values of said body of the transport element (14) are provided on both sides of the equator,
- the transport modules are positioned in such a direction that the half of the body of the transport element with the higher friction value is closest to the alignment wall (11), and
- the transport modules are arranged in a manner lowerable below the placement deck (12) in a direction contrary to a spring force (F1) in direction of gravity.

2. Placement station according to Claim 1, **characterized in that**, at a minimum distance to the alignment wall of the placement station, a row (a) of transport modules that can be positioned in a fixed alignment direction and, at a larger up to a maximum distance to the alignment wall, further rows (b, c, d) of transport modules that can be positioned in variable directions are arranged, wherein each row extends in a transport direction x of the Cartesian coordinate system and row c neighbors row d, row b neighbors row c, and row a neighbors row b in the y-direction of the Cartesian coordinate system, and that, on the one hand, the rows b, c, d that can be positioned in variable directions are provided for aligning on the alignment wall flat items which are individually and successively ejected from an upstream enveloping station onto the placement deck of the placement station and, on the other hand, the rows b, c, d are provided for aligning a stack of small- or large-format flat items of different thicknesses and with format deviations that is put on the placement station.

3. Placement station according to Claims 1 to 2, **characterized in that**, by means of a tooth system, all variably positionable transport modules are connected in their various angular positions in a self-locking manner with each other and with a setting mechanism, said setting mechanism having a transmission (126).

4. Placement station according to Claims 1 to 3, **characterized in that** there is provided a setting means (121) for direction adjustment in order to turn the transport modules by means of mechanical shifting into an angular orientation relative to the transport direction.

5. Placement station according to Claims 1 to 4, **characterized in that** the setting means (121) is designed as a wheel or as a lever with a circle segment.

6. Placement station according to Claim 5, **characterized in that** an adjustment of the angle of orientation from 0° to 45° relative to the transport direction x by fixed steps is provided.

7. Placement station according to Claim 6, **characterized in that** each step of setting by fixed steps corresponds to one angle segment within a range of 3° to 9° each.

8. Placement station according to Claims 1 to 3, **characterized in that** the setting mechanism is part of a direction alignment mechanism.

9. Placement station according to Claim 8, **characterized in that** the direction alignment mechanism has toothed racks (129) that are mechanically coupled with each other via a connecting part (127), wherein each of the toothed racks (129) has teeth (1291) arranged at least on one side, which teeth are in engagement with the teeth of an annular external gear rim (1841) of the carrier ring (184).

10. Placement station according to Claim 1, **characterized in that** an arrangement of sensors is provided on the placement deck (12) and/or on the alignment wall (11) of the placement station (10), that an encoder holder (ENH) for an encoder (EN) is arranged on the underside (190d) of a bearing plate (19a), and that the sensors and the encoder (EN) are electrically connected with the means for controlling the transport speed, wherein said means include at least one control unit.

11. Placement station according to Claim 10, **characterized in that** the control unit is arranged in the placement station and/or in an item-processing station following in downstream direction of the mail-item flow and that the sensors and the drive motor are connected via interfaces with the control unit.

12. Placement station according to Claims 1 to 4, **characterized in that** the setting means (121) is designed as a toothed disc that is fixed on the drive shaft of a setting motor.

13. Placement station according to Claim 12, **characterized in that** the setting motor is a step motor that is electrically connected via an interface unit with a control unit in order to control the movement of the respective lowermost flat item of a stack by the traction exerted by the transport elements in y-direction.

14. Placement station according to Claim 1, **characterized in that** there are provided a trigger sensor for detecting the placement of a stack or of an individual flat item, an encoder and at least one further sensor for detecting an incorrect position alignment of the stack or of the individual flat item and that the sensor and encoder signals of the placement station are interrogated by the control unit.

15. Placement station according to Claim 14, **characterized in that** the trigger sensor is also used for the detection of an incorrect position alignment of the stack or individual flat item.

16. Placement station according to Claim 2, **characterized in that** there is provided an initial positioning of the transport modules during their installation on the underside (120b) of the placement deck (12).

17. Placement station according to Claim 16, **characterized in that**, for the initial positioning of the permanently positioned transport modules in row (a), the transport modules are aligned at a first pre-defined alignment angle relative to the transport direction x and, for the initial positioning of the variably positionable transport modules in row (b), the transport modules are aligned at a second pre-defined alignment angle relative to the transport direction x.

18. Placement station according to Claim 16, **characterized in that** the initial positioning of the transport modules is different in any way.

19. Method for placing flat items and feeding them to a singularization station, with equipping a placement station with a plurality of transport elements each of which extends through a related opening in a placement deck (12) of the placement station (10) in a z-direction of a Cartesian coordinate system, wherein all transport elements being are driven by one single drive motor via toothed belt discs and toothed belts,,
with the steps:
- controlling the transport speed of the flat goods, wherein at least one trigger sensor is arranged in the placement station on the exit side of the mail-item flow, wherein the trigger sensor and the drive motor are electrically connected with means for controlling the transport speed of the flat items transported by the transport elements (14) in the transport direction x,
- equipping the placement station (10) with a plurality of transport modules,, wherein each transport element is carried by a transport module, and that the placement station (10) is provided with a plurality of transport modules each of which extends with a transport element mounted on its head side through a related opening in a placement deck (12) of the placement station (10) in a z-direction of a Cartesian coordinate system,
**characterized by** the steps:
- changing of the traction before or during operation of the placement station by turning at least one transport module,
- provision of a different friction values on both sides of the equator, wherein each transport element (14) has a ball-shaped, round, or barrel-shaped body with an equator,
- positioning of the transport modules in such a direction that the half of the body of the transport element with the higher friction value is closest to the alignment wall (11), and
- provision of a lowerability of the transport modules below the placement deck (12) in a direction contrary to a spring force (F1) in direction of gravity.

20. Method according to Claim 19, **characterized in that** the provision of the placement station (10) with a plurality of transport modules comprising the steps:
a) Equipping of a placement deck of a placement station with transport modules for edge alignment and for the transport of individual flat items or flat items in a stack in the transport direction x for feeding the flat items into a downstream singularization station, wherein flat items are of equal or different formats.
b) Driving of a common drive motor of the transport elements in order to allow an automatic placement of the stack on the alignment wall in y-direction as well as a transport of the stack in the transport direction x for feeding the flat items to the singularization station, wherein a first partial number of the transport elements is effective at a minimum distance from the alignment wall and a second partial number of the transport elements is effective at a greater up to maximum distance from the alignment wall, wherein the distance is selected according to the maximum format in such a way that the transport elements are effective from the edge up to the middle of a flat item of the maximum format.
c) Executing a joint adjustment of the second partial number of driven transport elements to an alignment direction between the x- and y-directions in order to allow an adjustment and transport of the stack or of a flat item in transport direction.

## Revendications

1. Poste de positionnement, destiné à positionner des produits plats et à les alimenter vers un poste de désolidarisation, pourvu d'une pluralité d'éléments de transport, qui saillissent respectivement à travers une ouverture associée dans un pont de positionnement (12) du poste de positionnement (10), dans une direction Z d'un système de coordonnées cartésiennes, tous les éléments de transport étant entraînés par une unique moteur d'entraînement via des poulies crantées et des courroies crantées,
- au moins un capteur de déclenchement étant placé du côté de la sortie du flux postal dans le poste de positionnement, le capteur de déclenchement et le moteur d'entraînement étant électriquement connectés avec des moyens destinés à commander la vitesse de transport des produits plats, qui dans la direction de transport X sont transportés par les éléments de transport (14),
- chaque élément de transport étant porté par un module de transport, le poste de positionnement (10) étant équipé d'une pluralité de modules de transport, qui saillissent respectivement par un élément de transport monté du côté tête à travers une ouverture associée dans un pont de positionnement (12) du poste de positionnement (10) dans une direction Z d'un système de coordonnées cartésiennes, **caractérisé en ce que**
- l'orientation de la traction avant ou pendant le fonctionnement du poste de positionnement étant variable par une rotation d'au moins un module de transport,
- chaque élément de transport (14) comportant un corps bombé rond ou en forme de barillet, pourvu d'un équateur, de part et d'autre de l'équateur étant prévue une valeur de friction différente du corps précédemment cité de l'élément de transport (14),
- les modules de transport étant positionnés dans une orientation telle, que la moitié du corps de l'élément de transport qui est dotée de la valeur de friction la plus élevée soit la plus proche de la paroi d'orientation (11) et
- les modules de transport étant placés en étant susceptibles d'être abaissés en direction de la force de gravité à l'encontre d'une force de ressort (F1) sous le pont de positionnement (12).

2. Poste de positionnement, selon la revendication 1, **caractérisé en ce qu'**à un écart minimal par rapport à la paroi d'orientation du poste de positionnement est placée une rangée (a) de modules de transport susceptibles d'être positionnés de manière fixe dans une orientation et à un autre écart jusqu'à un écart maximal par rapport à la paroi d'orientation sont placées d'autres rangées (b, c, d) de modules de transport susceptibles d'être positionnés avec une orientation variable, chaque rangée s'étendant dans une direction de transport X du système de coordonnées cartésiennes, la rangée c au voisinage de la rangée d, et la rangée b au voisinage de la rangée c, ainsi que la rangée a au voisinage de la rangée b, dans la direction Y du système de coordonnées cartésiennes et **en ce que** les rangées b, c, d de modules de transport susceptibles d'être positionnés avec une orientation variable sont prévues d'une part pour l'orientation de produits plats sur la paroi d'orientation, lesquels sont éjectés un à un et successivement par un poste d'insertion placé en amont sur le pont de positionnement du poste de positionnement et **en ce que** d'autre part, les rangées b, c, d sont prévues pour orienter une pile de produits plats de petit ou de grand format d'épaisseur différente et présentant des divergences de format, qui sont positionnés sur le poste de positionnement.

3. Poste de positionnement, selon les revendications 1 à 2, **caractérisé en ce que** tous les modules de transport susceptibles d'être positionnés avec une orientation variable sont assemblés les uns aux autres de manière autobloquante dans leurs différentes positions angulaires par l'intermédiaire d'une denture avec un mécanisme de réglage, le mécanisme de réglage comportant une transmission (126).

4. Poste de positionnement, selon les revendications 1 à 3, **caractérisé en ce qu'**il est prévu un moyen de réglage (121) pour l'orientation de la position, pour faire tourner les modules de transport par un ajustement mécanique dans une position angulaire par rapport à la direction de transport.

5. Poste de positionnement, selon les revendications 1 à 4, **caractérisé en ce que** le moyen de réglage (121) est conçu sous la forme d'une roue ou d'un levier avec un arc de cercle.

6. Poste de positionnement, selon la revendication 5, **caractérisé en ce qu'**il est prévu un réglage de l'angle d'orientation de 0° à 45° par rapport à la direction de transport X en niveaux fixes.

7. Poste de positionnement, selon la revendication 6, **caractérisé en ce que** lors de l'ajustement en niveaux fixes, chaque niveau correspond à respectivement un segment angulaire dans un ordre de 3° à 9°.

8. Poste de positionnement, selon les revendications 1 à 3, **caractérisé en ce que** le mécanisme de réglage est une partie intégrante d'un mécanisme d'orientation de la position.

9. Poste de positionnement, selon la revendication 8, **caractérisé en ce que** le mécanisme d'orientation de la position comporte des crémaillères (129) qui sont mécaniquement accouplées les unes aux autres par l'intermédiaire d'une pièce d'assemblage (127), chaque crémaillère (129) comportant des dents (1291) placées au moins sur un côté, qui sont en engrenage avec des dents d'une couronne à denture extérieure (1841) de forme annulaire de la bague porteuse (184).

10. Poste de positionnement, selon la revendication 1, **caractérisé en ce qu'**un ensemble de capteurs est prévu sur le pont de positionnement (12) et/ou sur la paroi d'orientation (11) du poste de positionnement (10), **en ce qu'**un support d'encodeur (ENH) pour un encodeur (EN) est placé sur la face inférieure (190d) d'une plaque d'appui (19a) et **en ce que** les capteurs et l'encodeur (EN) sont électriquement connectés avec des moyens destinés à commander la vitesse de transport, les moyens précédemment cités incluant au moins une unité de commande.

11. Poste de positionnement, selon la revendication 10, **caractérisé en ce que** l'unité de commande est placée dans le poste de positionnement et/ou dans un poste de traitement des produits suivant, en aval du flux postal et **en ce que** les capteurs et le moteur d'entraînement sont connectés par l'intermédiaire d'interfaces avec l'unité de commande.

12. Poste de positionnement, selon les revendications 1 à 4, **caractérisé en ce que** le moyen de réglage (121) est conçu sous la forme d'une roue dentée, qui est fixée sur l'arbre d'entraînement d'un servomoteur.

13. Poste de positionnement, selon la revendication 12, **caractérisé en ce que** le servomoteur est un moteur pas à pas, qui est électriquement connecté avec l'unité de commande par l'intermédiaire d'un ensemble d'interfaces, pour commander le déplacement de chaque fois celui des produits plats placé le plus bas dans une pile, sous l'effet de la traction exercée par les éléments de transport dans la direction Y.

14. Poste de positionnement, selon la revendication 1, **caractérisé en ce qu'**il est prévu un capteur de déclenchement, destiné à détecter le positionnement d'une pile ou d'un produit plat individuel, un encodeur et au moins un capteur supplémentaire, destiné à détecter une orientation de position défectueuse de la pile ou d'un produit plat individuel et **en ce que** les signaux des capteurs et de l'encodeur du poste de positionnement sont interrogés par l'unité de commande.

15. Poste de positionnement, selon la revendication 14, **caractérisé en ce que** le capteur de déclenchement est co-utilisé pour détecter une orientation de position défectueuse de la pile ou d'un produit plat individuel.

16. Poste de positionnement, selon la revendication 2, **caractérisé en ce qu'**un positionnement initial des modules de transport est prévu pendant leur montage sur la face inférieure (120b) du pont de positionnement (12).

17. Poste de positionnement, selon la revendication 16, **caractérisé en ce que** pour le positionnement initial des modules de transport à positionnement fixe dans la rangée (a), il est procédé à une orientation des modules de transport dans un premier angle d'orientation prédéfini par rapport à la direction de transport X et pour le positionnement initial des modules de transport susceptibles d'être positionnés avec une orientation variable dans la rangée (b), il est procédé à une orientation des modules de transport dans un deuxième angle d'orientation prédéfini par rapport à la direction de transport X.

18. Poste de positionnement, selon la revendication 16, **caractérisé en ce que** le positionnement initial des modules de transport est différent à volonté.

19. Procédé, destiné à positionner des produits plats et à les alimenter vers un poste de désolidarisation, comprenant l'équipement d'un poste de positionnement pourvu d'une pluralité d'éléments de transport, qui saillissent respectivement à travers une ouverture associée dans un pont de positionnement (12) du poste de positionnement (10), dans une direction Z d'un système de coordonnées cartésiennes, comprenant un entraînement de tous les éléments de transport par un unique moteur d'entraînement via des poulies crantées et des courroies crantées, comportant les étapes consistant à :
- commander la vitesse de transport des produits plats, au moins un capteur de déclenchement étant placé du côté de la sortie du flux postal dans le poste de positionnement, et le moteur d'entraînement étant électriquement connecté avec des moyens destinés à commander la vitesse de transport des produits plats, pour le transport des produits plats dans la direction de transport X par les éléments de transport (14),
- équiper le poste de positionnement (10) d'une pluralité de modules de transport, chaque élément de transport étant porté par un module de transport, qui respectivement par un élément de transport placé du côté tête, saillissent à travers une ouverture associée dans un pont de positionnement (12) du poste de positionnement (10) dans une direction Z d'un système de coordonnées cartésiennes, **caractérisé par** les étapes consistant à :
- modifier l'orientation de la traction avant ou pendant le fonctionnement du poste de positionnement, par une rotation d'au moins un module de transport,
- prévoir une valeur de friction différente de part et d'autre d'un équateur d'un corps de l'élément de transport (14), chaque élément de transport (14) comportant un corps bombé rond ou en forme de barillet, pourvu d'un équateur,
- positionner les modules de transport dans une orientation telle, que la moitié du corps de l'élément de transport qui est dotée de la valeur de friction la plus élevée soit la plus proche de la paroi d'orientation (11) et
- prévoir une aptitude à l'abaissement des modules de transport à l'encontre d'une force de ressort (F1) sous le pont de positionnement (12), dans la direction de la force de gravité.

20. Procédé, selon la revendication 19, **caractérisé en ce que** l'équipement du poste de positionnement (10) avec une pluralité de modules de transport comporte les étapes consistant à:
a) équiper un pont de dépose d'un poste de positionnement avec des modules de transport pour l'orientation des arêtes et pour le transport de produits plats individuels ou empilés en une pile dans la direction de transport X, pour alimenter les produits plats vers un poste de désolidarisation situé en aval, les produits plats présentant un format identique ou différent,
b) amorcer un moteur d'entraînement commun des éléments de transport, pour permettre un positionnement automatique de la pile sur la paroi d'orientation dans une direction Y, ainsi qu'un transport de la pile dans la direction de transport X, pour alimenter les produits plats vers le poste de désolidarisation, une première quantité partielle des éléments de transport étant efficace à un écart minimal par rapport à la paroi d'orientation et une deuxième quantité partielle des éléments de transport étant efficace à un autre écart jusqu'à un écart maximal par rapport à la paroi d'orientation, l'écart du format maximal étant sélectionné à une dimension telle que les éléments de transport soient efficaces du bord jusqu'au milieu d'un produit plat de format maximal, et
c) procéder à un réglage commun d'une orientation entre la direction X et Y de la deuxième quantité partielle des éléments de transport entraînés, pour permettre une orientation et un transport de la pile ou d'un produit plat dans la direction de transport.
